(19) Europäisches Patentamt / European Patent Office / Office européen des brevets

(11) **EP 4 693 992 A1**

(12) **EUROPEAN PATENT APPLICATION**
published in accordance with Art. 153(4) EPC

(43) Date of publication:
**11.02.2026 Bulletin 2026/07**

(21) Application number: **23931499.0**

(22) Date of filing: **07.04.2023**

(51) International Patent Classification (IPC):
**H04L 5/00** (2006.01)    **H04W 72/23** (2023.01)

(52) Cooperative Patent Classification (CPC):
**H04L 5/00; H04W 72/23**

(86) International application number:
**PCT/CN2023/086934**

(87) International publication number:
**WO 2024/207438 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fujitsu Limited**
**Kawasaki-shi, Kanagawa 211-8588 (JP)**

(72) Inventors:
• **TIAN, Yan**
**Beijing 100022 (CN)**
• **JIANG, Qinyan**
**Beijing 100022 (CN)**
• **ZHANG, Lei**
**Beijing 100022 (CN)**

(74) Representative: **Haseltine Lake Kempner LLP**
**Cheapside House**
**138 Cheapside**
**London EC2V 6BJ (GB)**

(54) **METHOD AND APPARATUS FOR TRANSMITTING PHYSICAL RANDOM ACCESS CHANNEL**

(57) A physical random access channel transmitting method and apparatus are provided, the method including: a terminal equipment transmits a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

201

a terminal equipment transmits a second number of PRACHs on a first number of ROs, the first number of Valid ROs being time-domain multiplexed, or the first number of Valid ROs being frequency-domain multiplexed, or the first number of Valid ROs being time-domain and frequency-domain multiplexed, and the first number and the second number being positive integers greater than or equal to 2.

**FIG. 2**

**Description**

Technical Field

This disclosure relates to the field of communication technologies.

Background

To enhance uplink coverage of a base station, NR Rel-18 studies enhancing the power for a UE to transmit PRACHs (Physical Random Access Channels) through multiple PRACH transmissions, so that the base station receives PRACHs transmitted by the UE with a weak coverage capability, thereby enhancing the uplink coverage of the base station.

Existing PRACH resource configuration scheme for initial access is to configure relevant PRACH resource information in system information, including *rach-ConfigCommon* and *additionalRACH-ConfigList-r17*. PRACH resource information such as frequency domain resources of a PRACH, *PRACH configuration Index* configured by RRC, etc.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

Summary

Currently, a PRACH configuration table may be queried via a PRACH configuration index configured by RRC, to obtain time-domain resource related information of a PRACH occasion. Table 1 is an example of the PRACH configuration table.

Table 1

| PRACH Configuration Index $N_t^{RA,slot}$ $N_{dur}^{RA}$ | Preamble format | $n_f$ mod $x = y$ | | Subframe number | Starting symbol | Number of PRACH slots within a subframe | , number of time-domain PRACH occasions within a PRACH slot | , PRACH duration |
|---|---|---|---|---|---|---|---|---|
| | | $x$ | $y$ | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |

In addition, Rel-18 determines to configure the PRACH occasion for multiple PRACH transmissions via an RO group.

However, in related arts, there is only a resource allocation scheme for a single PRACH transmission, and there is no method for configuring ROs (RACH Occasions) for multiple PRACH transmissions. For schemes of multiple PARCH transmissions, it is necessary to determine specific positions of their PRACH occasions. How to configure ROs for multiple PARCH transmissions is a problem that needs to be solved.

In order to solve one or more of said the above problems, the embodiments of the present disclosure provide a physical random access channel transmitting method and apparatus. That is, for one or more of said the above problems, the embodiments of the present disclosure propose corresponding solutions.

According to a first aspect of the embodiments of the present disclosure, a physical random access channel (PRACH) transmitting apparatus is provided, the apparatus is provided in a terminal equipment, the apparatus including: a first transmitting unit configured to transmit a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

According to a second aspect of the embodiments of the present disclosure, an RO configuring apparatus is provided, the apparatus is provided in a network device, the apparatus including: a first configuring unit configured to configure a terminal equipment with a first number of ROs for transmitting a second number of PRACHs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

According to a third aspect of the embodiments of the present disclosure, a physical random access channel (PRACH) transmitting apparatus is provided, the apparatus is provided in a terminal equipment, the apparatus including: a second transmitting unit configured to transmit a second number of PRACHs on a first number of ROs, the first number of ROs including a seventh number of ROs mapping identical SSBs starting from an initial RO, with ROs in a time domain being the second number of PRACHs, or a seventh number of ROs neighboring in the time domain starting from the initial RO, or the first number of ROs including a seventh number of ROs mapping identical SSBs starting from an initial RO, with ROs in a frequency domain being the second number of PRACHs, or a seventh number of ROs neighboring in the frequency domain starting from the initial RO, or the first number of ROs including a seventh number of ROs mapping identical SSBs starting from an initial RO, with ROs being the second number of PRACHs.

According to a fourth aspect of the embodiments of the present disclosure, an RO configuring apparatus is provided, the apparatus is provided in a network device, the apparatus including: a second configuring unit configured to configure a terminal equipment with a first number of ROs for transmitting a second number of PRACHs, the first number of ROs including a seventh number of ROs mapping identical SSBs starting from an initial RO, with ROs in a time domain being the second number of PRACHs, or a seventh number of ROs neighboring in the time domain starting from the initial RO, or the first number of ROs including a seventh number of ROs mapping identical SSBs starting from an initial RO, with ROs in a frequency domain being the second number of PRACHs, or a seventh number of ROs neighboring in the frequency domain starting from the initial RO, or the first number of ROs including a seventh number of ROs mapping identical SSBs starting from an initial RO, with ROs being the second number of PRACHs.

According to a fifth aspect of the embodiments of the present disclosure, a terminal equipment is provided, the terminal equipment including the apparatus described in the first or third aspect of the embodiments of the present disclosure.

According to a sixth aspect of the embodiments of the present disclosure, a network device is provided, the network device including the apparatus described in the second or fourth aspect of the embodiments of the present disclosure.

According to a seventh aspect of the embodiments of the present disclosure, a communication system is provided, the communication system including the terminal equipment described in the fifth aspect of the embodiments of the present disclosure and/or the network device described in the sixth aspect of the embodiments of the present disclosure.

According to an eighth aspect of the embodiments of the present disclosure, a physical random access channel (PRACH) transmitting method is provided, the method including: a terminal equipment transmits a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

According to a ninth aspect of the embodiments of the present disclosure, an RO configuring method is provided, the method including: a network device configures a terminal equipment with a first number of ROs for transmitting a second number of PRACHs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

According to a tenth aspect of the embodiments of the present disclosure, a physical random access channel (PRACH) transmitting method is provided, the method including: a terminal equipment transmits a second number of PRACHs on a first number of ROs, the first number of ROs including a seventh number of ROs mapping identical SSBs starting from an initial RO, with ROs in a time domain being the second number of PRACHs, or a seventh number of ROs neighboring in the time domain starting from the initial RO, or the first number of ROs including a seventh number of ROs mapping identical SSBs starting from an initial RO, with ROs in a frequency domain being the second number of PRACHs, or a seventh number of ROs neighboring in the frequency domain starting from the initial RO, or the first number of ROs including a seventh number of ROs mapping identical SSBs starting from an initial RO, with ROs being the second number of PRACHs.

According to an eleventh aspect of the embodiments of the present disclosure, an RO configuring method is provided, the method including: a network device configures a terminal equipment with a first number of ROs for transmitting a second number of PRACHs, the first number of ROs including a seventh number of ROs mapping identical SSBs starting from an initial RO, with ROs in a time domain being the second number of PRACHs, or a seventh number of ROs neighboring in the time domain starting from the initial RO, or the first number of ROs including a seventh number of ROs mapping identical SSBs starting from an initial RO, with ROs in a frequency domain being the second number of PRACHs, or a seventh number of ROs neighboring in the frequency domain starting from the initial RO, or the first number of ROs including a seventh number of ROs mapping identical SSBs starting from an initial RO, with ROs being the second number of PRACHs.

According to a twelfth aspect of the embodiments of the present disclosure, a computer program is provided, wherein when the program is executed in a physical random access channel transmitting apparatus or a terminal equipment, the program enables the physical random access channel transmitting apparatus or the terminal equipment to perform the physical random access channel transmitting method described in the eighth or tenth aspect of the embodiments of the present disclosure.

According to a thirteenth aspect of the embodiments of the present disclosure, a computer program is provided, wherein when the program is executed in an RO configuring apparatus or a network device, the program enables the RO configuring apparatus or the network device to perform the RO configuring method described in the ninth or eleventh aspect of the embodiments of the present disclosure.

According to a fourteenth aspect of the embodiments of the present disclosure, a storage medium that stores a computer program is provided, wherein the computer program enables a physical random access channel transmitting apparatus or a terminal equipment to perform the physical random access channel transmitting method described in the eighth or tenth aspect of the embodiments of the present disclosure.

According to a fifteenth aspect of the embodiments of the present disclosure, a storage medium that stores a computer program is provided, wherein the computer program enables an RO configuring apparatus or a network device to perform the RO configuring method described in the ninth or eleventh aspect of the embodiments of the present disclosure.

One of advantageous effects of the embodiments of the present disclosure lies in: by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Moreover, the embodiments of the present disclosure further propose a method for determining ROs of multiple PRACH transmissions, which may enable the network device and the terminal equipment to have a consistent definition of a PRACH occasion of multiple PRACHs, enables the network device to jointly detect ROs of multiple PRACHs and improves the efficiency of detecting multiple PRACHs by the network device.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include/comprising/including" when being used herein refers to presence of a feature, a whole piece, a step or a component, but does not exclude presence or addition of one or more other features, whole pieces, steps or components.

Brief Description of the Drawings

The included drawings are used to provide a further understanding on the embodiments of the present disclosure, constitute a part of the specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:

FIG. 1 is a schematic diagram of a communication system in the embodiments of the present disclosure;
FIG. 2 is a schematic diagram of a physical random access channel (PRACH) transmitting method in the embodiment 1 of the present disclosure;
FIG. 3 is a schematic diagram of SSB and RO mapping in the embodiment 1 of the present disclosure;
FIG. 4 is a schematic diagram of a time-domain multiplexed RO group in the embodiment 1 of the present disclosure;
FIG. 5 is another schematic diagram of a time-domain multiplexed RO group in the embodiment 1 of the present disclosure;
FIG. 6 is another schematic diagram of SSB and RO mapping in the embodiment 1 of the present disclosure;
FIG. 7 is a schematic diagram of a frequency-domain multiplexed RO group in the embodiment 1 of the present disclosure;

FIG. 8 is another schematic diagram of a frequency-domain multiplexed RO group in the embodiment 1 of the present disclosure;

FIG. 9 is a further schematic diagram of SSB and RO mapping in the embodiment 1 of the present disclosure;

FIG. 10 is a schematic diagram of a time-domain and frequency-domain multiplexed RO group in the embodiment 1 of the present disclosure;

FIG. 11 is another schematic diagram of a time-domain and frequency-domain multiplexed RO group in the embodiment 1 of the present disclosure;

FIG. 12 is a further schematic diagram of a time-domain and frequency-domain multiplexed RO group in the embodiment 1 of the present disclosure;

FIG. 13 is a schematic diagram of determining one RO group index in an order of frequency domain first and then time domain in the embodiment 1 of the present disclosure;

FIG. 14 is another schematic diagram of determining one RO group index in an order of frequency domain first and then time domain in the embodiment 1 of the present disclosure;

FIG. 15 is a further schematic diagram of determining one RO group index in an order of frequency domain first and then time domain in the embodiment 1 of the present disclosure;

FIG. 16 is a schematic diagram of determining one RO group index in an order of time domain first and then frequency domain in the embodiment 1 of the present disclosure;

FIG. 17 is another schematic diagram of determining one RO group index in an order of time domain first and then frequency domain in the embodiment 1 of the present disclosure;

FIG. 18 is a further schematic diagram of determining one RO group index in an order of time domain first and then frequency domain in the embodiment 1 of the present disclosure;

FIG. 19 is a schematic diagram of mapping one RO group in the embodiment 1 of the present disclosure;

FIG. 20 is a schematic diagram of an RO configuring method in the embodiment 2 of the present disclosure;

FIG. 21 is a schematic diagram of a multiple PRACH configuration list in the embodiment 2 of the present disclosure;

FIG. 22 is another schematic diagram of a multiple PRACH configuration list in the embodiment 2 of the present disclosure;

FIG. 23 is a schematic diagram of a physical random access channel transmitting method in the embodiment 3 of the present disclosure;

FIG. 24 is a schematic diagram of a physical random access channel transmitting method in the embodiment 4 of the present disclosure;

FIG. 25 is a schematic diagram of an RO configuring method in the embodiment 5 of the present disclosure;

FIG. 26 is a schematic diagram of a physical random access channel transmitting apparatus in the embodiment 6 of the present disclosure;

FIG. 27 is a schematic diagram of an RO configuring apparatus in the embodiment 7 of the present disclosure;

FIG. 28 is a schematic diagram of a physical random access channel transmitting apparatus in the embodiment 8 of the present disclosure;

FIG. 29 is a schematic diagram of an RO configuring apparatus in the embodiment 9 of the present disclosure;

FIG. 30 is a schematic block diagram of system structure of a terminal equipment in the embodiment 10 of the present disclosure;

FIG. 31 is a schematic block diagram of system structure of a network device in the embodiment 11 of the present disclosure.

Detailed Description

Referring to the drawings, through the following specification, the aforementioned and other features of the present disclosure will become obvious. The specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. may include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, "more" or "multiple" refers to at least two (two or more) or at least two kinds.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a user equipment in a communication system to the communication network and provides services for the user equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE)" refers to, for example, a device that accesses a communication network and receives network services through a network device. The user equipment may be fixed or mobile, and may also be referred to as Mobile Station (MS), a terminal, Subscriber Station (SS), Access Terminal (AT) and a station and so on.

The user equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the user equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Description is made through the following examples and in combination with scenarios of the embodiments of the present disclosure and existing problems, however the embodiments of the present disclosure are not limited thereto.

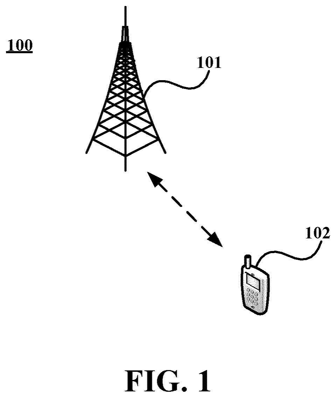

FIG. 1 is a schematic diagram of a communication system in the embodiments of the present disclosure, as shown in FIG. 1, a communication system 100 may include a network device 101 and a terminal equipment 102.

In the embodiments of the present disclosure, existing or further implementable services can be carried out between the network device 101 and the terminal equipment 102. For example, these services include but are not limited to: enhanced Mobile Broadband (eMBB), massive Machine Type Communication (mMTC), Ultra-Reliable and Low-Latency Communication (URLLC) and so on.

Various implementations of the embodiments of the present disclosure will be described below with reference to the drawings. These implementations are exemplary only and are not limitations to the present disclosure.

Embodiment 1

Embodiments of the present disclosure provide a physical random access channel transmitting method, applied to a terminal equipment. For example, it is applied to the terminal equipment 102 in FIG. 1.

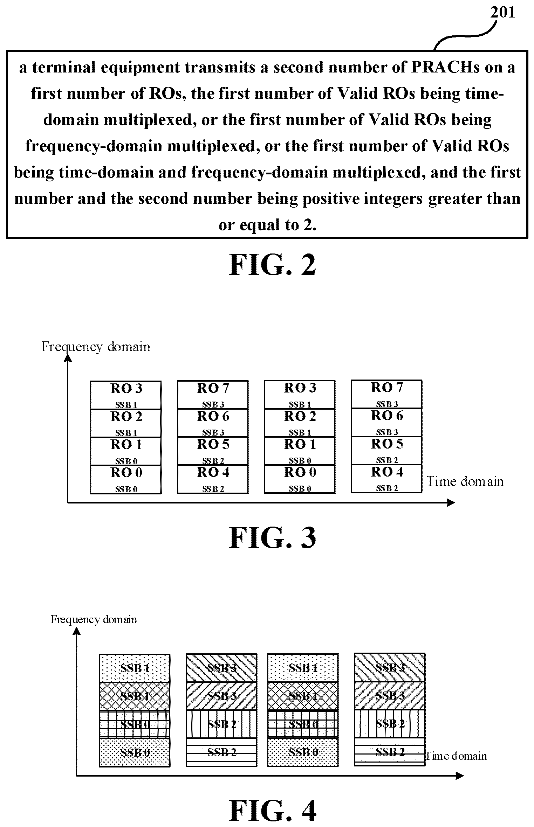

FIG. 2 is a schematic diagram of a physical random access channel (PRACH) transmitting method in the embodiment 1 of the present disclosure. As shown in FIG. 2, the method includes:

> step 201: a terminal equipment transmits a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

In some embodiments, the first number of ROs may further be called multiple ROs, the first number of ROs or multiple ROs are one RO group.

In some embodiments, the first number of ROs are multiple PRACH occasions of multiple PRACH transmission in one time, and a set of the first number of ROs may be called an RO group, that is, the first number of ROs are one RO group. That is to say, the first number is the number of ROs in one RO group.

In some embodiments, the first number of ROs (or called ROs in an RO group) are associated with the same SSB or different SSBs.

In some embodiments, the first number of ROs (or called ROs in the RO group) are valid ROs.

In some embodiments, the RO may further be called a RACH occasion or a PRACH occasion.

In some embodiments, the first number of ROs for transmitting a second number of PRACHs may be configured by a network device, i.e., multiple ROs for transmitting multiple PRACHs may be configured by a network device.

In some embodiments, configuration of the RO or configuration of the RO group is cell specific configuration or terminal specific (UE specific) configuration.

In some embodiments, the second number of PRACHs are called a plurality of PRACHs, i.e., multiple PRACHs.

For example, the second number is a specific number of multiple PRACHs, or number or times of the PRACHs transmitted by a terminal equipment in multiple PRACH transmissions.

In some embodiments, the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

That is to say, the terminal equipment may transmit the second number of identical PRACHs on the first number of ROs, or transmit the second number of different PRACHs, the identical PRACHs being PRACHs with identical preambles, and the different PRACHs being PRACHs with different preambles.

In some embodiments, the first number is equal to the second number, or, the first number is greater than or equal to the second number.

In some embodiments, for a case where the first number is greater than or equal to the second number, for example, the first number is greater than a configurable second number.

For example, the number of PRACH repetitions is 2, i.e., the second number is 2, and the first number is 4.

In some embodiments, for a case where the first number is greater than or equal to the second number, for example, the first number is equal to a maximum value of the configurable second number.

For example, the number of PRACH repetitions configured by RRC may be any number in {2, 4, 8}, that is, the configurable second number is {2, 4, 8}, then the first number is the maximum value 8 therein.

In some embodiments, at least one of the first number and the second number is configured by a network device via RRC message. For example, it is configured by RRC in system information SIB1.

In some embodiments, the network device configures one of the first number and the second number, or, the network device configures both of the first number and the second number.

For example, the network device configures one of the first number and the second number, the first number is equal to the second number; the network device configures both of the first number and the second number, the first number is greater than or equal to the second number.

As described above, the first number of ROs are time-domain multiplexed, or the first number of ROs are frequency-domain multiplexed, or the first number of ROs are time-domain and frequency-domain multiplexed.

In some embodiments, the first number of ROs are time-domain multiplexed, which is also called TDM multiplexing mode or time multiplexed PRACH occasion(s); the first number of ROs are frequency-domain multiplexed, which is also called FDM multiplexing mode or frequency multiplexed PRACH occasion(s); the first number of ROs are time-domain and frequency-domain multiplexed, which is also called TDM and FDM multiplexing mode or time multiplexed and frequency multiplexed PRACH occasion(s).

Specific descriptions are respectively made below for cases of RO multiplexing.

First, description is made for a case where the first number of ROs are time-domain multiplexed.

For example, if the first number is N, ROs of one RO group (ROs of a multiple PRACH) are N time-domain multiplexed ROs, and ROs of one RO group (ROs of a multiple PRACH) have only one RO in the frequency domain.

In some embodiments, for a case where the first number of ROs are time-domain multiplexed, the first number of ROs are first number of time-domain multiplexed ROs mapping identical SSBs. That is to say, when the first number is N, N ROs are N ROs mapping identical SSBs in the time domain. The following examples are given for description.

In some embodiments, a mapping method for SSB and RO is an existing method. Or, for a mapping method for SSB and RO, other mapping methods may further be adopted. The embodiments of the present disclosure do not impose limitations on a mapping method for SSB and RO.

FIG. 3 is a schematic diagram of SSB and RO mapping in the embodiment 1 of the present disclosure. As shown in FIG. 3, one rectangle represents one RO. In the SSB and RO mapping configuration configured by RRC, the number of SSBs mapped to each RO is 1/2, that is, the number of ROs mapped to each SSB is 2; the number of ROs multiplexed in the frequency domain is 4, and there are total of 4 SSBs in this cell.

For example, the first number (N) is 2, ROs in an RO group are two ROs mapping identical SSBs (i.e., identical SSB index) in the time domain. Moreover, the number of RO groups is 8.

FIG. 4 is a schematic diagram of a time-domain multiplexed RO group in the embodiment 1 of the present disclosure. As shown in FIG. 4, one rectangle represents one RO, ROs marked with the same pattern are ROs in one RO group, and ROs in one RO group are two ROs mapping identical SSBs in the time domain.

In some embodiments, for a case where the first number of ROs are time-domain multiplexed, the first number of ROs are first number of ROs neighboring in the time domain. That is to say, when the first number is N, ROs in one RO group are N ROs neighboring in the time domain.

In some embodiments, the N ROs neighboring in the time domain refer to that the N ROs in one RO group are ROs with the closest time-domain resource interval, or time-domain resource indices of ROs are continuous.

For example, the first number (N) is 4, ROs in one RO group are four ROs neighboring in the time domain. Moreover, the number of RO groups is 8.

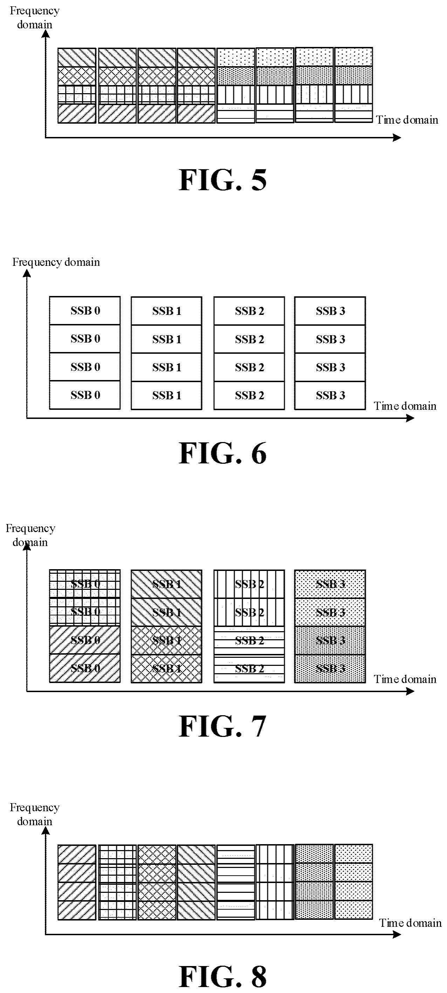

FIG. 5 is another schematic diagram of a time-domain multiplexed RO group in the embodiment 1 of the present disclosure. As shown in FIG. 5, one rectangle represents one RO, ROs marked with the same pattern are ROs in one RO group, and ROs in one RO group are four ROs neighboring in the time domain.

Next, description is made for a case where the first number of ROs are frequency-domain multiplexed.

For example, if the first number is N, ROs of one RO group (ROs of a multiple PRACH) are N frequency-domain multiplexed ROs, moreover, ROs of one RO group (ROs of a multiple PRACH) have only one RO in the time domain.

In some embodiments, for a case where the first number of ROs are frequency-domain multiplexed, the first number of ROs are first number of frequency-domain multiplexed ROs mapping identical SSBs. That is to say, when the first number is N, N ROs are N ROs mapping identical SSBs in the frequency domain. The following examples are given for description.

In some embodiments, a mapping method for SSB and RO is an existing method. Or, for a mapping method for SSB and RO, other mapping methods may further be adopted. The embodiments of the present disclosure do not impose limitations on a mapping method for SSB and RO.

FIG. 6 is another schematic diagram of SSB and RO mapping in the embodiment 1 of the present disclosure. As shown in FIG. 6, one rectangle represents one RO. In the SSB and RO mapping configuration configured by RRC, the number of SSBs mapped to each RO is 1/4, that is, the number of ROs mapped to each SSB is 4; the number of ROs multiplexed in the frequency domain is 4, and there are a total of 4 SSBs in this cell.

For example, the first number (N) is 2, ROs in one RO group are two ROs mapping identical SSBs (i.e., identical SSB index) in the frequency domain. Moreover, the number of RO groups is 8.

FIG. 7 is a schematic diagram of a frequency-domain multiplexed RO group in the embodiment 1 of the present disclosure. As shown in FIG. 7, one rectangle represents one RO, ROs marked with the same pattern are ROs in one RO group, and ROs in one RO group are two ROs mapping identical SSBs in the frequency domain.

In some embodiments, for a case where the first number of ROs are frequency-domain multiplexed, the first number of ROs are first number of ROs neighboring in the frequency domain. That is to say, when the first number is N, ROs in one RO group are N ROs neighboring in the frequency domain.

In some embodiments, the N ROs neighboring in the frequency domain refer to that the N ROs in one RO group are ROs with the closest frequency-domain resource interval, or frequency-domain resource indices of ROs are continuous.

For example, the first number (N) is 4, ROs in one RO group are four ROs neighboring in the frequency domain. Moreover, the number of RO groups is 8.

FIG. 8 is another schematic diagram of a frequency-domain multiplexed RO group in the embodiment 1 of the present disclosure. As shown in FIG. 8, one rectangle represents one RO, ROs marked with the same pattern are ROs in one RO group, and ROs in one RO group are four ROs neighboring in the frequency domain.

Then, description is made for a case where the first number of ROs are time-domain and frequency-domain multiplexed.

In some embodiments, the first number of ROs include a third number of time-domain multiplexed ROs and a fourth number of frequency-domain multiplexed ROs, the first number being equal to a multiplying of the third number and the fourth number.

For example, the first number is N, the third number is L, the fourth number is H, $N=L\times H$.

ROs of one RO group (ROs of a multiple PRACH) are N time-domain and frequency-domain multiplexed ROs, ROs of one RO group (ROs of a multiple PRACH) have L ROs in the time domain and H ROs in the frequency domain.

In some embodiments, for a case where the first number of ROs are time-domain and frequency-domain multiplexed, the first number of ROs include a third number of time-domain multiplexed ROs mapping identical SSBs and a fourth number of frequency-domain multiplexed ROs mapping identical SSBs. The following examples are given for description.

In some embodiments, a mapping method for SSB and RO is an existing method. Or, for a mapping method for SSB and RO, other mapping methods may further be adopted. The embodiments of the present disclosure do not impose limitations on a mapping method for SSB and RO.

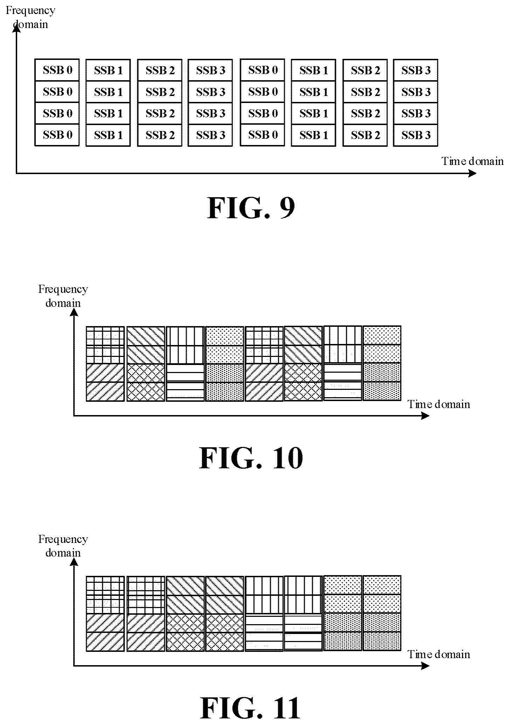

FIG. 9 is a further schematic diagram of SSB and RO mapping in the embodiment 1 of the present disclosure. As shown in FIG. 9, one rectangle represents one RO. In the SSB and RO mapping configuration configured by RRC, the number of SSBs mapped to each RO is 1/4, that is, the number of ROs mapped to each SSB is 4; the number of ROs multiplexed in the frequency domain is 4, and there are a total of 4 SSBs in this cell.

For example, the first number (N) is 4, ROs in one RO group include two ROs mapping identical SSBs (i.e., identical SSB index) in the time domain and two ROs mapping identical SSBs (i.e., identical SSB index) in the frequency domain. Moreover, the number of RO groups is 8.

FIG. 10 is a schematic diagram of a time-domain and frequency-domain multiplexed RO group in the embodiment 1 of the present disclosure. As shown in FIG. 10, one rectangle represents one RO, ROs marked with the same pattern are ROs in one RO group, and ROs in one RO group include two ROs mapping identical SSBs in the time domain and two ROs mapping identical SSBs in the frequency domain.

In some embodiments, for a case where the first number of ROs are time-domain and frequency-domain multiplexed, the first number of ROs include a third number of ROs neighboring in the time domain and a fourth number of ROs neighboring in the frequency domain. That is to say, when the first number is N, ROs in one RO group include L ROs neighboring in the time domain and H ROs neighboring in the frequency domain.

In some embodiments, the L ROs neighboring in the time domain refer to that the L ROs in one RO group are ROs with the closest time-domain resource interval, or time-domain resource indices of ROs are continuous; the H ROs neighboring in the frequency domain refer to that the H ROs in one RO group are ROs with the closest frequency-domain resource interval, or frequency-domain resource indices of ROs are continuous.

For example, the first number (N) is 4, ROs in one RO group include two ROs neighboring in the time domain and two ROs neighboring in the frequency domain. Moreover, the number of RO groups is 8.

FIG. 11 is another schematic diagram of a time-domain and frequency-domain multiplexed RO group in the embodiment 1 of the present disclosure. As shown in FIG. 11, one rectangle represents one RO, ROs marked with the same pattern are ROs in one RO group, and ROs in one RO group include two ROs neighboring in the time domain and two ROs neighboring in the frequency domain.

As described above, for a case where the first number of ROs are time-domain and frequency-domain multiplexed, the first number of ROs include a third number of time-domain multiplexed ROs and a fourth number of frequency-domain multiplexed ROs, wherein at least one of the third number and the fourth number is configured by the network device via RRC message. For example, it is configured by RRC in system information SIB1.

In some embodiments, for a case where the first number of ROs are time-domain and frequency-domain multiplexed, ROs in the RO group are determined through the following steps:

determining an RO in a fifth number of RO groups in an ascending order of frequency-domain resource indices of ROs;
determining an RO in the fifth number of RO groups in an ascending order of time-domain resource indices of ROs within a PARCH slot;
determining an RO in the fifth number of RO groups in an ascending order of PRACH slot indices; and
circularly determining ROs in each RO group in sequence, until allocation of the fifth number of RO groups is completed.

The following examples are given for description. For example, the fifth number is 3, i.e., three RO groups are configured.

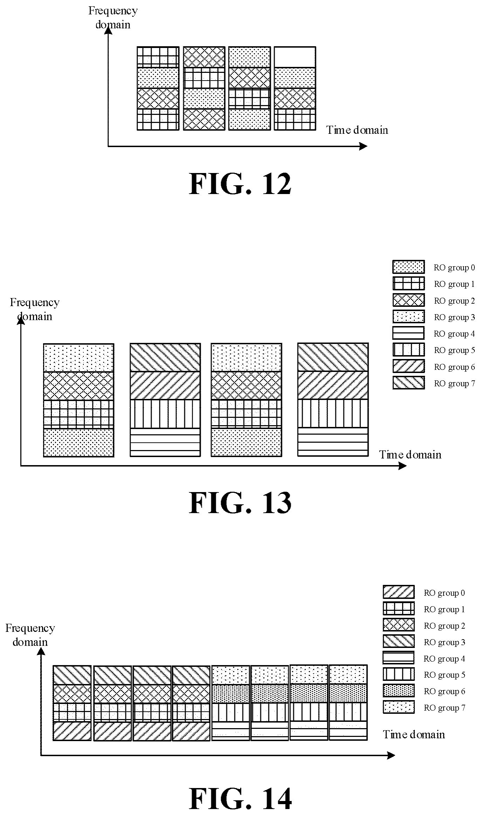

FIG. 12 is a further schematic diagram of a time-domain and frequency-domain multiplexed RO group in the embodiment 1 of the present disclosure. As shown in FIG. 12, first, one RO in three RO groups is determined in an ascending order of frequency-domain resource indices of ROs, then one RO in the RO groups (or one RO of three multiple PRACHs) is determined in an ascending order of time-domain resource indices of ROs within a PRACH slot; next, one RO in the RO groups (or one RO of three multiple PRACHs) is determined in an ascending order of PRACH slot indices; circularly determining ROs in each RO group in sequence, until allocation of three RO groups (three multiple PRACHs) is completed. Specific descriptions are made above for cases of RO multiplexing.

In some embodiments, the number of RO groups is multiple, and RO groups are identified via RO group index. The RO group index is an index of one RO group.

In some embodiments, the RO group index may further be a Multiple PRACH Index.

In some embodiments, the RO group index is determined in an ascending order of frequency-domain resource indices of ROs first, and then determined in an ascending order of time-domain resource indices of the ROs; or, the RO group index is determined in an ascending order of time-domain resource indices of ROs first, and then determined in an ascending order of frequency-domain resource indices of the ROs; for example, the RO group index is first determined in an ascending order of time-domain resource indices of ROs within a period, and then determined in an ascending order of frequency-domain resource indices of the ROs.

In some embodiments, the period is a period during which mapping of all RO groups is completed, or the period is a period during which mapping of all SSBs of RO groups is completed.

The following examples are given for description.

For a case where the RO group index is determined in an ascending order of frequency-domain resource indices of ROs first, and then determined in an ascending order of time-domain resource indices of the ROs,

FIG. 13 is a schematic diagram of determining one RO group index in an order of frequency domain first and then time domain in the embodiment 1 of the present disclosure. As shown in FIG. 13, corresponding to the RO group shown in FIG. 4, indices 0 to 7 of the RO group are determined in an order of frequency domain first and then time domain, that is, the RO group includes RO group 0 to RO Group 7.

FIG. 14 is another schematic diagram of determining one RO group index in an order of frequency domain first and then time domain in the embodiment 1 of the present disclosure. As shown in FIG. 14, corresponding to the RO group shown in FIG. 5, indices 0 to 7 of the RO group are determined in an order of frequency domain first and then time domain, that is, the RO group includes RO group 0 to RO Group 7.

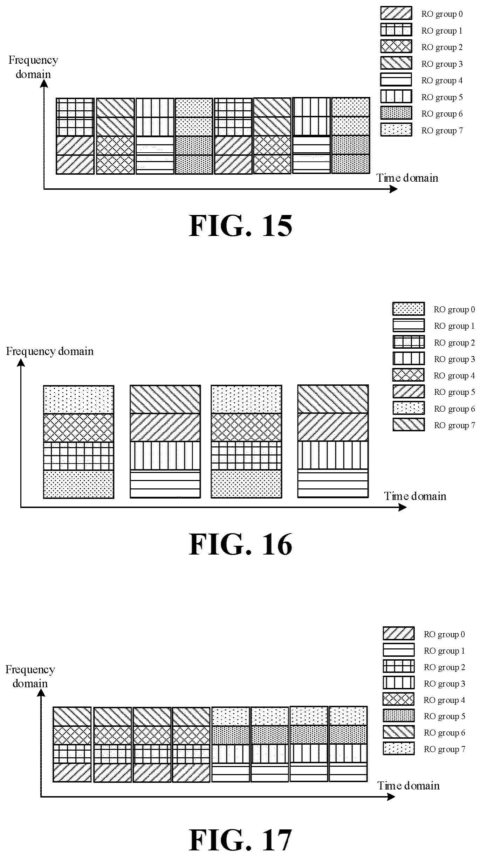

FIG. 15 is a further schematic diagram of determining one RO group index in an order of frequency domain first and then time domain in the embodiment 1 of the present disclosure. As shown in FIG. 15, corresponding to the RO group shown in FIG. 10, indices 0 to 7 of the RO group are determined in an order of frequency domain first and then time domain, that is, the RO group includes RO group 0 to RO Group 7.

For a case where the RO group index is determined in an ascending order of time-domain resource indices of ROs first, and then determined in an ascending order of frequency-domain resource indices of the ROs,

FIG. 16 is a schematic diagram of determining one RO group index in an order of time domain first and then frequency domain in the embodiment 1 of the present disclosure. As shown in FIG. 16, corresponding to the RO group shown in FIG. 4, indices 0 to 7 of the RO group are determined in an order of time domain first and then frequency domain, that is, the RO group includes RO group 0 to RO Group 7.

FIG. 17 is another schematic diagram of determining one RO group index in an order of time domain first and then frequency domain in the embodiment 1 of the present disclosure. As shown in FIG. 17, corresponding to the RO group shown in FIG. 5, indices 0 to 7 of the RO group are determined in an order of time domain first and then frequency domain, that is, the RO group includes RO group 0 to RO Group 7.

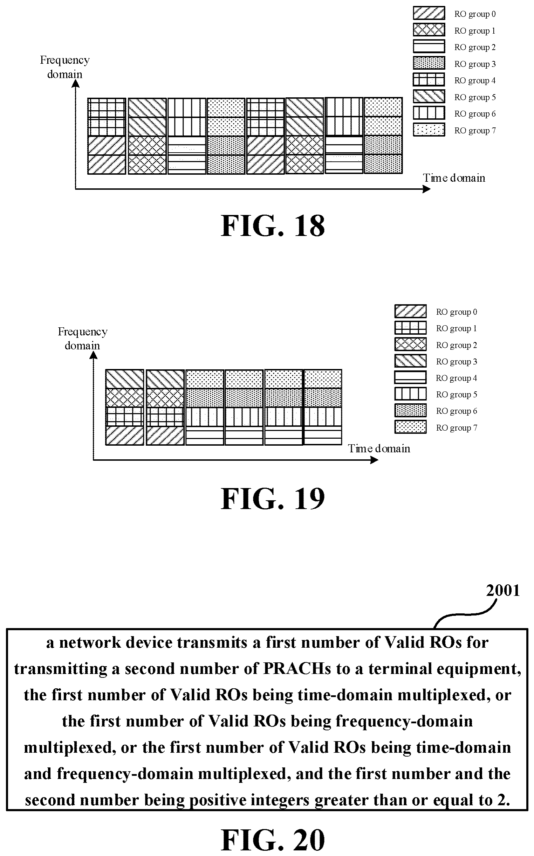

FIG. 18 is a further schematic diagram of determining one RO group index in an order of time domain first and then frequency domain in the embodiment 1 of the present disclosure. As shown in FIG. 18, corresponding to the RO group shown in FIG. 10, indices 0 to 7 of the RO group are determined in an order of time domain first and then frequency domain, that is, the RO group includes RO group 0 to RO Group 7.

As described above, the RO group index is determined in an ascending order of frequency-domain resource indices of ROs first, and then determined in an ascending order of time-domain resource indices of the ROs; or, the RO group index is determined in an ascending order of time-domain resource indices of ROs first, and then determined in an ascending order of frequency-domain resource indices of the ROs. In some embodiments, the time-domain resource indices and frequency-domain resource indices of the RO are determined according to PRACH configuration index configured by the network device or by other means. That is to say, the RO is determined according to the PRACH configuration index or by other means. Embodiments of the present disclosure do not impose limitations on a mode for configuring or determining time-domain resources and frequency-domain resources of the RO.

In some embodiments, the number of RO groups is the fifth number.

In some embodiments, the number of RO groups, i.e., a maximum value of the fifth number, is a directly defined default value.

In some embodiments, numbers of ROs each RO group in the fifth number of RO groups are identical, for example numbers of ROs in each RO group in four RO groups are 2.

Or, numbers of ROs in some RO groups in the fifth number of RO groups are identical, and numbers of ROs in some RO groups are different. For example, in four RO groups, numbers of ROs in RO group 0 and RO group 1 are 2, numbers of ROs in RO group 2 are 4, and numbers of ROs in RO group 3 are 8.

Or, numbers of ROs in each RO group in the fifth number of RO groups are different. For example, in four RO groups, numbers of ROs in RO group 0 are 2, numbers of ROs in RO group 1 are 3, numbers of ROs in RO group 2 are 4, and numbers of ROs in RO group 3 are 8.

In some embodiments, the number of RO groups, i.e., the fifth number, is configured by a network device via RRC message. For example, it is configured by RRC in system information SIB1.

In some embodiments, for a case where numbers of ROs of each RO group in the RO groups are identical: for example, RRC configures the number of RO groups and the number of ROs in RO groups, and numbers of ROs in each configured RO group are identical.

In some embodiments, for a case where numbers of ROs of each RO group in the RO groups are different or numbers of ROs of some RO groups are different: for example, RRC configures numbers of ROs in the RO groups and the number of RO groups with certain numbers of ROs, for example numbers of ROs in the configured RO groups are 2, and the number of RO groups with two ROs is three.

In some embodiments, for a case where numbers of ROs of some RO groups in the RO groups are different, RO groups with the same number of ROs are mapped first, and RO group indices (or multiple PRACH indices) are mapped in an ascending order of the numbers of ROs in the RO groups, or, RO groups with the same number of ROs are mapped first, and RO group indices (or multiple PRACH indices) are mapped in a descending order of the numbers of ROs in the RO groups.

In the following text, that the numbers of ROs of some RO groups are different, and RO group indices are mapped in an ascending order of the numbers of ROs in the RO groups is taken as an example for description.

FIG. 19 is a schematic diagram of mapping one RO group in the embodiment 1 of the present disclosure.

As shown in FIG. 19, one rectangle represents one RO, ROs marked with the same pattern are ROs in one RO group. In an RO configuration (or multiple PRACH configuration), four RO groups with the number of ROs being 2 are configured, four RO groups with the number of ROs being 4 are configured, the RO group index with the number of ROs being 2 is mapped first, and then the RO group index with the number of ROs being 4 is mapped. And the RO group indices are mapped in an order of frequency domain first and then time domain. Moreover, the ROs in the RO groups are determined according to N ROs (2 or 4) neighboring in the time domain.

In some embodiments, the number of ROs in one RO group, i.e., a maximum value of the first number is a sixth number. For example, the maximum value of the first number is expressed as Nmax.

In some embodiments, the sixth number is configured via RRC message, for example, configured by RRC in system information SIB1. Or, the sixth number is a directly defined default value.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Moreover, the embodiments of the present disclosure further propose a method for determining ROs of multiple PRACH transmissions, which may enable the network device and the terminal equipment to have a consistent definition of a PRACH occasion of multiple PRACHs, enables the network device to jointly detect ROs of multiple PRACHs and improves the efficiency of detecting multiple PRACHs by the network device.

Embodiment 2

Embodiment 2 of the present disclosure further provides an RO configuring method, the method is applicable to a network device side. The method corresponds to the method in the embodiment 1, the same contents are not repeated. For example, the method is applicable to the network device 101 in FIG. 1.

FIG. 20 is a schematic diagram of an RO configuring method in the embodiment 2 of the present disclosure. As shown in FIG. 20, the method includes:

step 2001: a network device transmits a first number of ROs for transmitting a second number of PRACHs to a terminal equipment,
the first number of ROs being time-domain multiplexed, or the first number of ROs being frequency-domain multiplexed, or the first number of ROs being time-domain and frequency-domain multiplexed, and the first number and the second number being positive integers greater than or equal to 2.
the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

In some embodiments, the first number of ROs are an RO group.

In some embodiments, for a case where the first number of ROs are time-domain and frequency-domain multiplexed, the first number of ROs include a third number of time-domain multiplexed ROs and a fourth number of frequency-domain multiplexed ROs, the first number being equal to a multiplying of the third number and the fourth number.

In some embodiments, the number of the RO groups is a fifth number, numbers of ROs in RO groups in the fifth number of RO groups are identical, or numbers of ROs in RO groups in the fifth number of RO groups are different.

In some embodiments, a maximum value of the first number is a sixth number.

In some embodiments, the network device configures at least one of the first number, the second number, the third number, the fourth number, the fifth number and the sixth number via RRC message. For example, it is configured by the network device via RRC in system information SIB1.

In some embodiments, the network device configures the ROs by using an existing PRACH configuration table or configures the ROs in other ways.

In some embodiments, the network device configures a multiple PRACH by using a multiple PRACH configuration list.

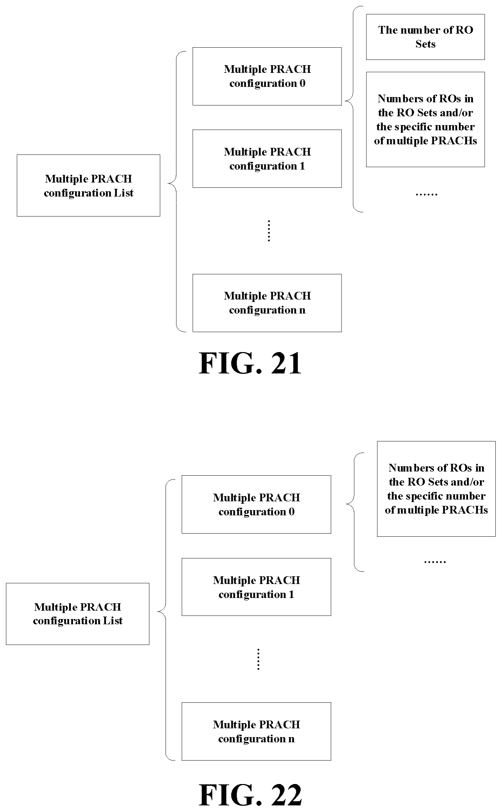

FIG. 21 is a schematic diagram of a multiple PRACH configuration list in the embodiment 2 of the present disclosure. As shown in FIG. 21, a plurality of multiple PRACH configurations are configured in a multiple PRACH configuration list, and a plurality of RO groups are configured in the multiple PRACH configuration, and the number of RO groups, the number of ROs (the first number) and/or a specific number of multiple PRACHs (the second number) is/are indicated in the multiple PRACH configuration.

In some embodiments, a maximum value of the number of multiple PRACH configurations configured in the multiple PRACH configuration list is a directly defined default value.

For the configuring method shown in FIG. 21, the number of RO groups is indicated in the multiple PRACH configuration.

In some embodiments, a maximum value of the number of RO groups is a directly defined default value, or the maximum value of the number of RO groups is configured by RRC, for example configured by RRC in system information SIB1.

In some embodiments, the multiple PRACH configuration may further configure other parameters, such as SSB mapping, a PRACH configuration index, etc.

FIG. 22 is another schematic diagram of a multiple PRACH configuration list in the embodiment 2 of the present disclosure. As shown in FIG. 22, a plurality of multiple PRACH configurations are configured in a multiple PRACH configuration list, and one multiple PRACH configuration configures for one RO group, in addition, the number of ROs (the first number) in the RO group and/or a specific number of multiple PRACHs (the second number) will be configured in the multiple PRACH configuration.

For the configuring mode shown in FIG. 22, the multiple PRACH configuration corresponds to the RO group, the number of multiple PRACH configurations is the number of RO groups.

In some embodiments, a maximum value of the number of RO groups is a directly defined default value, or the maximum value of the number of RO groups is configured by RRC, for example configured by RRC in system information SIB1.

In some embodiments, the multiple PRACH configuration may further configure other parameters, such as SSB mapping, a PRACH configuration index, etc.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Embodiment 3

Embodiment 3 of the present disclosure further provides a physical random access channel transmitting method, the method is applicable to a network device side and a terminal equipment side. The method corresponds to the methods in embodiment 1 and embodiment 2, the same contents are not repeated. For example, the method is applicable to the network device 101 and the terminal equipment 102 in FIG. 1 and FIG. 2.

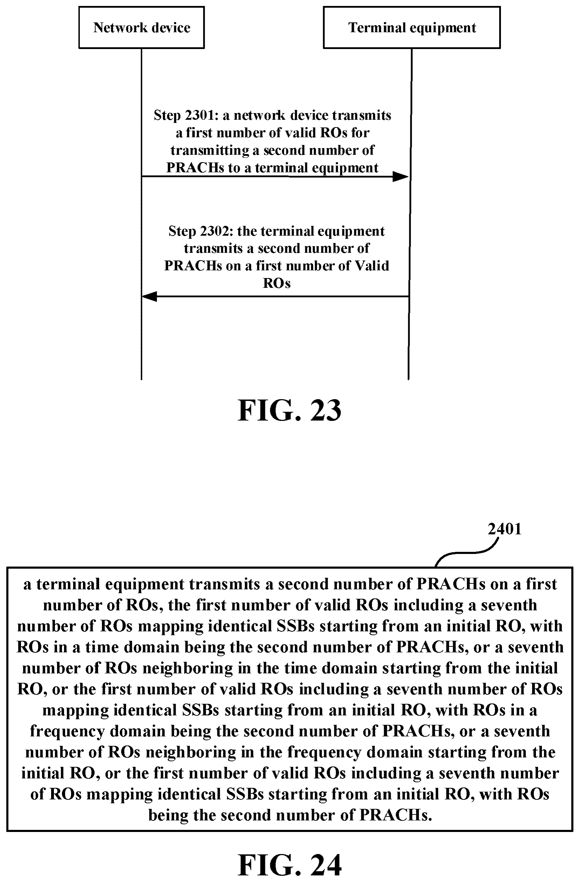

FIG. 23 is a schematic diagram of a physical random access channel transmitting method in the embodiment 3 of the present disclosure. As shown in FIG. 23, the method includes:

step 2301: a network device transmits a first number of ROs for transmitting a second number of PRACHs to a terminal equipment,
step 2302: the terminal equipment transmits a second number of PRACHs on a first number of ROs,
the first number of ROs being time-domain multiplexed, or the first number of ROs being frequency-domain multiplexed, or the first number of ROs being time-domain and frequency-domain multiplexed, and the first number and the second number being positive integers greater than or equal to 2.

Specific implementation method of each of the above steps may be referred to the records in embodiment 1 and embodiment 2, and is not repeated here.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Embodiment 4

Embodiments of the present disclosure provide a physical random access channel transmitting method, applied to a terminal equipment. For example, it is applied to the terminal equipment 102 in FIG. 1.

FIG. 24 is a schematic diagram of a physical random access channel transmitting method in the embodiment 4 of the present disclosure. As shown in FIG. 24, the method includes:

step 2401: a terminal equipment transmits a second number of PRACHs on a first number of ROs,
the first number of ROs including a seventh number of ROs mapping identical SSBs starting from an initial RO, with ROs in a time domain being the second number of PRACHs, or a seventh number of ROs neighboring in the time domain starting from the initial RO, or
the first number of ROs including a seventh number of ROs mapping identical SSBs starting from an initial RO, with ROs in a frequency domain being the second number of PRACHs, or a seventh number of ROs neighboring in the frequency domain starting from the initial RO, or
the first number of ROs including a seventh number of ROs mapping identical SSBs starting from an initial RO, with ROs being the second number of PRACHs.

In some embodiments, for a method for SSB and RO, an existing method is reused, or other methods are adopted.

In some embodiments, the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

In some embodiments, information of the initial RO is configured by RRC message. For example, it is configured by RRC in system information SIB1.

In some embodiments, the information of the initial RO includes at least one of a system frame where the initial RO is located, a subframe in the system frame, a PRACH slot in the subframe, a position of an RO in the time domain in the PRACH slot, and a frequency domain position of the RO on the time domain position of the PRACH.

In some embodiments, the seventh number is configured by RRC message. For example, it is configured by RRC in system information SIB1.

In some embodiments, contents related to the embodiment 1 may be referred to the records in embodiment 1, and are not repeated here.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Moreover, the embodiments of the present disclosure further propose a method for determining ROs of multiple PRACH transmissions, which may enable the network device and the terminal equipment to have a consistent definition of a PRACH occasion of multiple PRACHs, enables the network device to jointly detect ROs of multiple PRACHs and improves the efficiency of detecting multiple PRACHs by the network device.

Embodiment 5

Embodiment 5 of the present disclosure further provides an RO configuring method, the method is applicable to a network device side. The method corresponds to the method in the embodiment 4, the same contents are not repeated. For example, the method is applicable to the network device 101 in FIG. 1.

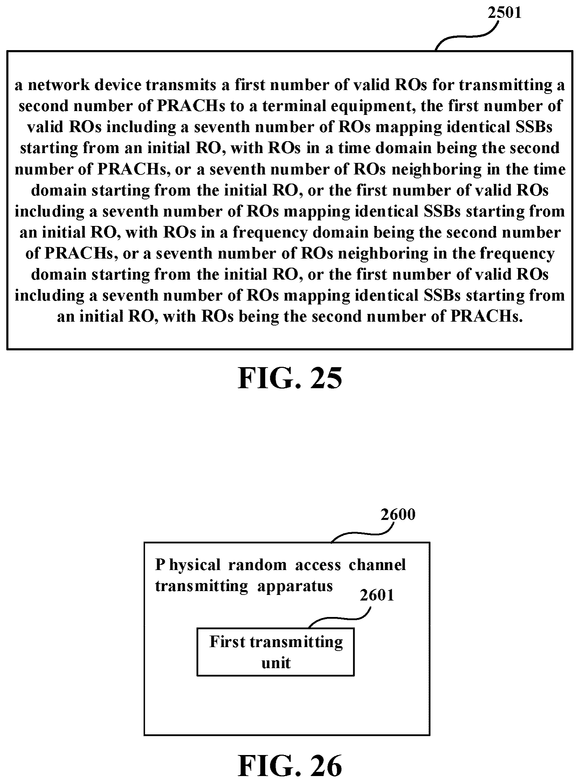

FIG. 25 is a schematic diagram of an RO configuring method in the embodiment 5 of the present disclosure. As shown in FIG. 25, the method includes:

step 2501: a network device transmits a first number of ROs for transmitting a second number of PRACHs to a terminal equipment,
the first number of ROs including a seventh number of ROs mapping identical SSBs starting from an initial RO, with ROs in a time domain being the second number of PRACHs, or a seventh number of ROs neighboring in the time domain starting from the initial RO, or

the first number of ROs including a seventh number of ROs mapping identical SSBs starting from an initial RO, with ROs in a frequency domain being the second number of PRACHs, or a seventh number of ROs neighboring in the frequency domain starting from the initial RO, or

the first number of ROs including a seventh number of ROs mapping identical SSBs starting from an initial RO, with ROs being the second number of PRACHs.

In some embodiments, for a mapping method for SSB and RO, an existing mapping method is reused, or other mapping methods are adopted.

In some embodiments, the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

In some embodiments, the network device configures information of the initial RO via RRC message. For example, it is configured by the network device via RRC in system information SIB1.

In some embodiments, the information of the initial RO includes at least one of a system frame where the initial RO is located, a subframe in the system frame, a PRACH slot in the subframe, a position of an RO in the time domain in the PRACH slot, and a frequency domain position of the RO in the time domain of the PRACH.

In some embodiments, the network device configures the seventh number via RRC message. For example, it is configured by the network device via RRC in system information SIB1.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Embodiment 6

Embodiment 6 of the present disclosure provide a physical random access channel transmitting apparatus, the apparatus is applicable to a terminal equipment. The principle of the apparatus to solve the problem is similar to the method in the embodiment 1, thus for its specific implementation, the implementation of the method in the embodiment 1 may be referred to, the same or relevant contents are not repeated here.

FIG. 26 is a schematic diagram of a physical random access channel transmitting apparatus in the embodiment 6 of the present disclosure. As shown in FIG. 26, the physical random access channel transmitting apparatus 2600 includes:

a first transmitting unit 2601 configured to transmit a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

In some embodiments, the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

In some embodiments, the first number of ROs are an RO group.

In some embodiments, for a case where the first number of ROs are time-domain multiplexed, the first number of ROs are first number of time-domain multiplexed ROs mapping identical SSBs.

In some embodiments, for a mapping method for the SSB and the RO, an existing mapping method is reused, or other mapping methods are adopted.

In some embodiments, for a case where the first number of ROs are time-domain multiplexed, the first number of ROs are first number of ROs neighboring in the time domain.

In some embodiments, for a case where the first number of ROs are frequency-domain multiplexed, the first number of ROs are first number of frequency-domain multiplexed ROs mapping identical SSBs.

In some embodiments, for a mapping method for the SSB and the RO, an existing mapping method is reused, or other mapping methods are adopted.

In some embodiments, for a case where the first number of ROs are frequency-domain multiplexed, the first number of ROs are first number of ROs neighboring in the frequency domain.

In some embodiments, for a case where the first number of ROs are time-domain and frequency-domain multiplexed, the first number of ROs include a third number of time-domain multiplexed ROs mapping identical SSBs and a fourth number of frequency-domain multiplexed ROs mapping identical SSBs, the first number being equal to a multiplying of the third number and the fourth number.

In some embodiments, for a case where the first number of ROs are time-domain and frequency-domain multiplexed, the first number of ROs include a third number of ROs neighboring in the time domain and a fourth number of ROs neighboring in the frequency domain, the first number being equal to a multiplying of the third number and the fourth number.

In some embodiments, the first number is equal to the second number, or, the first number is greater than or equal to the second number.

In some embodiments, at least one of the first number, the second number, the third number and the fourth number is configured via RRC message. For example, it is configured by RRC in system information SIB1.

In some embodiments, for a case where the first number of ROs are time-domain and frequency-domain multiplexed, ROs in the RO group are determined through the following steps:

determining an RO in a fifth number of RO groups in an ascending order of frequency-domain resource indices of ROs;
determining an RO in the fifth number of RO groups in an ascending order of time-domain resource indices of ROs within a PARCH slot;
determining an RO in the fifth number of RO groups in an ascending order of PRACH slot indices; and
circularly determining ROs in each RO group in sequence, until allocation of the fifth number of RO groups is completed.

In some embodiments, the RO group index is an index of an RO group.

In some embodiments, the RO group index is determined in an ascending order of frequency-domain resource indices of ROs first, and then determined in an ascending order of time-domain resource indices of the ROs; or

the RO group index is determined in an ascending order of time-domain resource indices of ROs first, and then determined in an ascending order of frequency-domain resource indices of the ROs,
the time-domain resource indices and frequency-domain resource indices of the RO are determined according to PRACH configuration index configured by the network device configuration or by other means.

In some embodiments, the number of the RO groups is the fifth number,
numbers of ROs in RO groups in the fifth number of RO groups are identical, or numbers of ROs in RO groups in the fifth number of RO groups are different.

In some embodiments, for a case where the numbers of ROs in a part of RO groups in the RO groups are different,

RO groups with identical numbers of ROs are mapped first, and RO group indices are mapped in an ascending order of numbers of ROs within the RO groups, or,

RO groups with identical numbers of ROs are mapped first, and RO group indices are mapped in a descending order of numbers of ROs within the RO groups.

In some embodiments, a maximum value of the first number is a sixth number.

In some embodiments, the fifth number is configured by RRC message. For example, it is configured by RRC in system information SIB1.

In some embodiments, the sixth number is configured via RRC message, for example, configured by RRC in system information SIB1. Or, the sixth number is a default value.

Function and specific content of each of the above-mentioned units may be referred to the records of the relevant steps in the embodiment 1, and are not repeated here.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Moreover, the embodiments of the present disclosure further propose a method for determining ROs of multiple PRACH transmissions, which may enable the network device and the terminal equipment to have a consistent definition of a PRACH occasion of multiple PRACHs, enables the network device to jointly detect ROs of multiple PRACHs and improves the efficiency of detecting multiple PRACHs by the network device.

Embodiment 7

Embodiment 7 of the present disclosure provide an RO configuring apparatus, the apparatus is applicable to a network device. The principle of the apparatus to solve the problem is similar to the method in the embodiment 2, thus for its specific implementation, the implementation of the method in the embodiment 2 may be referred to, the same or relevant contents are not repeated here.

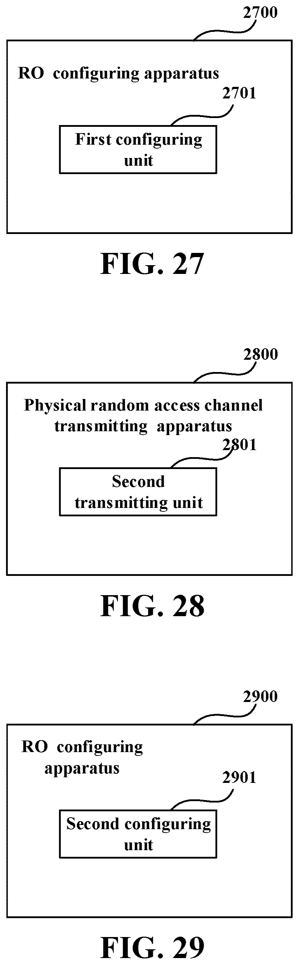

FIG. 27 is a schematic diagram of an RO configuring apparatus in the embodiment 7 of the present disclosure. As shown in FIG. 27, the RO configuring apparatus 2700 includes:

a first configuring unit 2701 configured to configure a terminal equipment with a first number of ROs for transmitting a second number of PRACHs,

the first number of ROs being time-domain multiplexed, or the first number of ROs being frequency-domain multiplexed, or the first number of ROs being time-domain and frequency-domain multiplexed, and the first number and the second number being positive integers greater than or equal to 2.

In some embodiments, the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

In some embodiments, the first number of ROs are an RO group.

In some embodiments, for a case where the first number of ROs are time-domain and frequency-domain multiplexed, the first number of ROs include a third number of time-domain multiplexed ROs and a fourth number of frequency-domain multiplexed ROs,

the first number being equal to a multiplying of the third number and the fourth number.

In some embodiments, the number of the RO groups is the fifth number,

numbers of ROs in RO groups in the fifth number of RO groups are identical, or numbers of ROs in RO groups in the fifth number of RO groups are different.

In some embodiments, a maximum value of the first number is a sixth number.

In some embodiments, the first configuring unit 2701 configures at least one of the first number, the second number, the third number, the fourth number, the fifth number and the sixth number via RRC message. For example, it is configured by the network device via RRC in system information SIB1.

In some embodiments, the first configuring unit 2701 configures the ROs by using an existing PRACH configuration table or configures the ROs in other ways.

Function and specific content of each of the above-mentioned units may be referred to the records of the relevant steps in the embodiment 2, and are not repeated here.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Embodiment 8

Embodiment 8 of the present disclosure provide a physical random access channel transmitting apparatus, the apparatus is applicable to a terminal equipment. The principle of the apparatus to solve the problem is similar to the method in the embodiment 4, thus for its specific implementation, the implementation of the method in the embodiment 4 may be referred to, the same or relevant contents are not repeated here.

FIG. 28 is a schematic diagram of a physical random access channel transmitting apparatus in the embodiment 8 of the present disclosure. As shown in FIG. 28, the physical random access channel transmitting apparatus 2800 includes:

a second transmitting unit 2801 configured to transmit a second number of PRACHs on a first number of ROs,

the first number of ROs including a seventh number of ROs mapping identical SSBs starting from an initial RO, with ROs in a time domain being the second number of PRACHs, or a seventh number of ROs neighboring in the time domain starting from the initial RO, or

the first number of ROs including a seventh number of ROs mapping identical SSBs starting from an initial RO, with ROs in a frequency domain being the second number of PRACHs, or a seventh number of ROs neighboring in the frequency domain starting from the initial RO, or

the first number of ROs including a seventh number of ROs mapping identical SSBs starting from an initial RO, with ROs being the second number of PRACHs.

In some embodiments, for a mapping method for SSB and RO, an existing mapping method is reused, or other mapping methods are adopted.

In some embodiments, the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

In some embodiments, information of the initial RO is configured by RRC message. For example, it is configured by RRC in system information SIB1.

In some embodiments, the information of the initial RO includes at least one of a system frame where the initial RO is located, a subframe in the system frame, a PRACH slot in the subframe, a position of an RO in the time domain in the PRACH slot, and a frequency domain position of the RO on the time domain position of the

PRACH.

In some embodiments, the seventh number is configured by RRC message. For example, it is configured by RRC in system information SIB1.

Function and specific content of each of the above-mentioned units may be referred to the records of the relevant steps in the embodiment 4, and are not repeated here.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Moreover, the embodiments of the present disclosure further propose a method for determining ROs of multiple PRACH transmissions, which may enable the network device and the terminal equipment to have a consistent definition of a PRACH occasion of multiple PRACHs, enables the network device to jointly detect ROs of multiple PRACHs and improves the efficiency of detecting multiple PRACHs by the network device.

Embodiment 9

Embodiment 9 of the present disclosure provide an RO configuring apparatus, the apparatus is applicable to a network device. The principle of the apparatus to solve the problem is similar to the method in the embodiment 5, thus for its specific implementation, the implementation of the method in the embodiment 5 may be referred to, the same or relevant contents are not repeated here.

FIG. 29 is a schematic diagram of an RO configuring apparatus in the embodiment 9 of the present disclosure. As shown in FIG. 29, the RO configuring apparatus 2900 includes:

a second configuring unit 2901 configured to configure a terminal equipment with a first number of ROs for transmitting a second number of PRACHs,
the first number of ROs including a seventh number of ROs mapping identical SSBs starting from an initial RO, with ROs in a time domain being the second number of PRACHs, or a seventh number of ROs neighboring in the time domain starting from the initial RO, or
the first number of ROs including a seventh number of ROs mapping identical SSBs starting from an initial RO, with ROs in a frequency domain being the second number of PRACHs, or a seventh number of ROs neighboring in the frequency domain starting from the initial RO, or
the first number of ROs including a seventh number of ROs mapping identical SSBs starting from an initial RO, with ROs being the second number of PRACHs.

In some embodiments, for a mapping method for SSB and RO, an existing mapping method is reused, or other mapping methods are adopted.

In some embodiments, the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

In some embodiments, the second configuring unit 2901 configures information of the initial RO via RRC message. For example, it is configured by RRC in system information SIB1.

In some embodiments, the information of the initial RO includes at least one of a system frame where the initial RO is located, a subframe in the system frame, a PRACH slot in the subframe, a position of an RO in the time domain in the PRACH slot, and a frequency domain position of the RO in the time domain of the PRACH.

In some embodiments, the second configuring unit 2901 configures the seventh number via RRC message. For example, it is configured by RRC in system information SIB1.

Function and specific content of each of the above-mentioned units may be referred to the records of the relevant steps in the embodiment 5, and are not repeated here.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Embodiment 10

Embodiments of the present disclosure provide a terminal equipment, the terminal equipment including a physical random access channel transmitting apparatus according to embodiment 6 or 8.

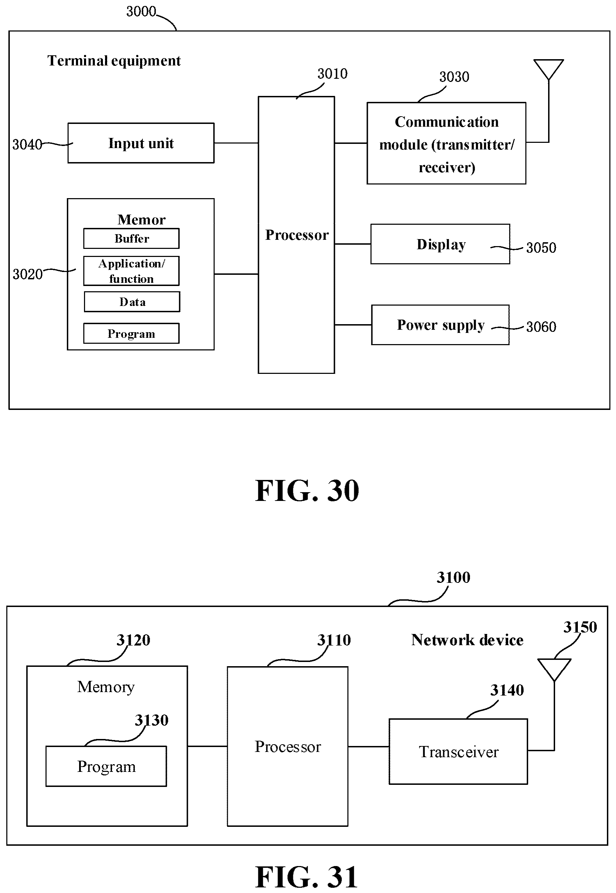

FIG. 30 is a schematic block diagram of system structure of a terminal equipment in the embodiment 10 of the present disclosure. As shown in FIG. 30, the terminal equipment 3000 may include: a processor 3010 and a memory 3020; the memory 3020 is coupled to the processor 3010. It's worth noting that this figure is exemplary; other types of structures can also be used to supplement or replace this structure, so as to realize a telecommunication function or other functions.

In an implementation, functions of the physical random access channel transmitting apparatus may be integrated into the processor 3010.

Corresponding to the embodiment 6, the processor 3010 is configured as follows: a terminal equipment transmits a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

Corresponding to the embodiment 8, the processor 3010 is configured as follows: a terminal equipment transmits a second number of PRACHs on a first number of ROs, the first number of ROs including a seventh number of ROs mapping identical SSBs starting from an initial RO, with ROs in a time domain being the second number of PRACHs, or a seventh number of ROs neighboring in the time domain starting from the initial RO, or the first number of ROs including a seventh number of ROs mapping identical SSBs starting from an initial RO, with ROs in a frequency domain being the second number of PRACHs, or a seventh number of ROs neighboring in the frequency domain starting from the initial RO, or the first number of ROs including a seventh number of ROs mapping identical SSBs starting from an initial RO, with ROs being the second number of PRACHs.

In another implementation, the physical random access channel transmitting apparatus may be configured separately from the processor 3010, for example the physical random access channel transmitting apparatus may be configured as a chip connected to the processor 3010, functions of the physical random access channel transmitting apparatus are realized through the control of the processor 3010.

As shown in FIG. 30, the terminal equipment 3000 may further include: a communication module 3030, an input unit 3040, a display 3050 and a power source 3060. It's worth noting that the terminal equipment 3000 does not have to include all the components shown in FIG. 30. Moreover, the terminal equipment 3000 may also include components not shown in FIG. 30, relevant technologies may be referred to.

As shown in FIG. 30, the processor 3010, sometimes called a controller or an operational control, may include a microprocessor or other processor device and/or logic device, the processor 3010 receives inputs and controls operations of each component of the terminal equipment 3000.

The memory 3020 may, for example, be one or more of a cache, flash memory, hard drive, removable medium, volatile memory, non-volatile memory or other suitable device. It may store various data, moreover may further store a program that executes relevant information. And the processor 3010 may execute the program stored in the memory 3020 to achieve information storage or processing, etc. Functions of other components are similar to those in related arts, and are not repeated here. Components of the terminal equipment 3000 may be implemented via specialized hardware, firmware, software or a combination thereof, without deviating from the scope of the present disclosure.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Moreover, the embodiments of the present disclosure further propose a method for determining ROs of multiple PRACH transmissions, which may enable the network device and the terminal equipment to have a consistent definition of a PRACH occasion of multiple PRACHs, enables the network device to jointly detect ROs of multiple PRACHs and improves the efficiency of detecting multiple PRACHs by the network device.

Embodiment 11

Embodiments of the present disclosure provide a network device, the network device including an RO configuring apparatus according to embodiment 7 or 9.

FIG. 31 is a schematic block diagram of system structure of a network device in the embodiment 11 of the present disclosure. As shown in FIG. 31, the network device 3100 may include: a processor 3110 and a memory 3120; the memory 3120 is coupled to the processor 3110. The memory 3120 may store various data; moreover, further stores a program 3130 for information processing, and executes the program 3130 under the control of the processor 3110.

In an implementation, functions of the RO configuring apparatus may be integrated into the processor 3110.

Corresponding to the embodiment 7, the processor 3110 may be configured as follows: a network device configures a terminal equipment with a first number of ROs for transmitting a second number of PRACHs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

Corresponding to the embodiment 9, the processor 3110 may be configured as follows: a network device configures a terminal equipment with a first number of ROs for transmitting a second number of PRACHs, the first number of ROs including a seventh number of ROs mapping identical SSBs starting from an initial RO, with ROs in a time domain being the second number of PRACHs, or a seventh number of ROs neighboring in the time domain starting from the initial RO, or the first number of ROs including a seventh number of ROs mapping identical SSBs starting from an initial RO, with ROs in a frequency domain being the second number of PRACHs, or a seventh number of ROs neighboring in the frequency domain starting from the initial RO, or the first number of ROs including a seventh number of ROs mapping identical SSBs starting from an initial RO, with ROs being the second number of PRACHs.

In another implementation, the RO configuring apparatus may be configured separately from the processor 3110, for example the RO configuring apparatus may be configured as a chip connected to the processor 3110, functions of the RO configuring apparatus are realized through the control of the processor 3110.

In addition, as shown in FIG. 31, the network device 3100 may further include: a transceiver 3140 and an antenna 3150, etc.; wherein the functions of the components are similar to related arts, which are not repeated here. It's worth noting that the network device 3100 does not have to include all the components shown in FIG. 31. Moreover, the network device 3100 may further include components not shown in FIG. 31, related arts may be referred to.

As may be known from the above embodiments, by providing an RO configuration mechanism for multiple PRACH transmissions, a terminal equipment (UE) in areas with a poor coverage capability is capable of performing multiple PRACH transmissions, thereby enhancing the energy of the terminal equipment in transmitting access channels and enhancing a possibility and accuracy of a network device to receive PRACHs transmitted by the terminal equipment, thereby enhancing uplink coverage of the network device.

Embodiment 12

Embodiments of the present disclosure provide a communication system, including the terminal equipment according to the embodiment 10 and/or the network device according to the embodiment 11.

For example, for the structure of the communication system, FIG. 1 may be referred to.

As shown in FIG. 1, the communication system 100 includes a network device 101 and a terminal equipment 102, the network device 101 is the same as the network device recorded in the embodiment 11, the terminal equipment 102 is the same as the terminal equipment recorded in the embodiment 10, the repeated contents are not elaborated further.

The apparatus and method in the embodiments of the present disclosure may be realized by hardware, or may be realized by combining hardware with software. The embodiments of the present disclosure relate to such a computer readable program, when the program is executed by a logic component, the computer readable program enables the logic component to realize the device described in the above text or a constituent component, or enables the logic component to realize various methods or steps described in the above text. The embodiments of the present disclosure further relate to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in FIG. 26 may correspond to software modules of a computer program flow, and may also correspond to hardware modules. These software modules may respectively correspond to the steps as shown in FIG. 2. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in FIG. 26 may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the FIG. 26 may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

As for the implementations including the above embodiments, the following supplements are further disclosed:

Supplement I

1. A physical random access channel (PRACH) transmitting apparatus, provided in a terminal equipment, the apparatus including:

a first transmitting unit configured to transmit a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

2. The apparatus according to Supplement 1, wherein,

the second number of PRACHs are PRACHs carrying identical preambles, or, the second number of PRACHs are PRACHs carrying different preambles, or, a part of the second number of PRACHs are PRACHs carrying identical preambles, and the other part of the second number of PRACHs are PRACHs carrying different preambles.

3. The apparatus according to Supplement 1 or 2, wherein, the first number of ROs are an RO group.

4. The apparatus according to any one of Supplements 1 to 3, wherein for a case where the first number of ROs are time-domain multiplexed, the first number of ROs are first number of time-domain multiplexed ROs mapping identical SSBs.

5. The apparatus according to Supplement 4, wherein, for a mapping method for the SSB and the RO, an existing mapping method is reused, or other mapping methods are adopted.

6. The apparatus according to any one of Supplements 1 to 3, wherein for a case where the first number of ROs are time-domain multiplexed, the first number of ROs are first number of ROs neighboring in the time domain.

8. The apparatus according to any one of Supplements 1 to 3, wherein for a case where the first number of ROs are frequency-domain multiplexed, the first number of ROs are first number of frequency-domain multiplexed ROs mapping identical SSBs.

9. The apparatus according to Supplement 8, wherein, for a mapping method for the SSB and the RO, an existing mapping method is reused, or other mapping methods are adopted.

10. The apparatus according to any one of Supplements 1 to 3, wherein for a case where the first number of ROs are frequency-domain multiplexed,

the first number of ROs are first number of ROs neighboring in the frequency domain.

11. The apparatus according to any one of Supplements 1 to 3, wherein for a case where the first number of ROs are time-domain and frequency-domain multiplexed,

the first number of ROs include a third number of time-domain multiplexed ROs mapping identical SSBs and a fourth number of frequency-domain multiplexed ROs mapping identical SSBs, the first number being equal to a multiplying of the third number and the fourth number.

12. The apparatus according to any one of Supplements 1 to 3, wherein for a case where the first number of ROs are time-domain and frequency-domain multiplexed,

the first number of ROs include a third number of ROs neighboring in the time domain and a fourth number of ROs neighboring in the frequency domain, the first number being equal to a multiplying of the third number and the fourth number.

13. The apparatus according to any one of Supplements 1 to 12, wherein,

the first number is equal to the second number, or,
the first number is greater than or equal to the second number.

14. The apparatus according to any one of Supplements 1 to 13, wherein,

at least one of the first number, the second number, the third number and the fourth number is configured via RRC message.

15. The apparatus according to any one of Supplements 1 to 3, wherein for a case where the first number of ROs are time-domain and frequency-domain multiplexed, ROs in the RO group are determined through the following steps:

determining an RO in a fifth number of RO groups in an ascending order of frequency-domain resource indices of ROs;
determining an RO in the fifth number of RO groups in an ascending order of time-domain resource indices of ROs within a PARCH slot;
determining an RO in the fifth number of RO groups in an ascending order of PRACH slot indices; and
circularly determining ROs in each RO group in sequence, until allocation of the fifth number of RO groups is completed.

16. The apparatus according to any one of Supplements 3 to 15, wherein,

the RO group index is an index of an RO group.

17. The apparatus according to Supplement 16, wherein,

the RO group index is determined in an ascending order of frequency-domain resource indices of ROs first, and then determined in an ascending order of time-domain resource indices of the ROs, or
the RO group index is determined in an ascending order of time-domain resource indices of ROs first, and then determined in an ascending order of frequency-domain resource indices of the ROs,
the time-domain resource indices and frequency-domain resource indices of the RO are determined according to PRACH configuration index configured by the network device or by other means.

18. The apparatus according to any one of Supplements 3 to 17, wherein,

the number of RO groups is the fifth number,
numbers of ROs in RO groups in the fifth number of RO groups are identical, or numbers of ROs in RO groups in the fifth number of RO groups are different.

19. The apparatus according to Supplement 18, wherein for a case where the numbers of ROs in a part of RO groups in the RO groups are different,

RO groups with identical numbers of ROs are mapped first, and RO group indices are mapped in an ascending order of numbers of ROs within the RO groups, or,
RO groups with identical numbers of ROs are mapped first, and RO group indices are mapped in a descending order of numbers of ROs within the RO groups.

20. The apparatus according to any one of Supplements 1 to 19, wherein,

a maximum value of the first number is a sixth number.

21. The apparatus according to any one of Supplements 18 to 20, wherein,

the fifth number is configured by RRC message, and/or,
the sixth number being configured via RRC message or being a default value.

22. An RO configuring apparatus, provided in a network device, the apparatus including:

a first configuring unit configured to configure a terminal equipment with a first number of ROs for transmitting a second number of PRACHs,
the first number of ROs being time-domain multiplexed, or the first number of ROs being frequency-domain multiplexed, or the first number of ROs being time-domain and frequency-domain multiplexed, and the first number and the second number being positive integers greater than or equal to 2.

23. The apparatus according to Supplement 22, wherein,

the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

24. The apparatus according to Supplement 22 or 23, wherein,
the first number of ROs are an RO group.

25. The apparatus according to Supplement 22, wherein for a case where the first number of ROs are time-domain and frequency-domain multiplexed,

the first number of ROs include a third number of time-domain multiplexed ROs and a fourth number of frequency-domain multiplexed ROs,
the first number being equal to a multiplying of the third number and the fourth number.

26. The apparatus according to Supplement 24, wherein,

the number of RO groups is the fifth number,
numbers of ROs in RO groups in the fifth number of RO groups are identical, or numbers of ROs in RO groups in the fifth number of RO groups are different.

27. The apparatus according to any one of Supplements 22 to 26, wherein,
a maximum value of the first number is a sixth number.

28. The apparatus according to any one of Supplements 22 to 27, wherein,
the first configuring unit configures at least one of the first number, the second number, the third number, the fourth number, the fifth number and the sixth number via RRC message.

29. The apparatus according to any one of Supplements 22 to 28, wherein,
the first configuring unit configures the ROs by using an existing PRACH configuration table or configures the ROs in other ways.

30. A physical random access channel (PRACH) transmitting apparatus, provided in a terminal equipment, the apparatus including:

a second transmitting unit configured to transmit a second number of PRACHs on a first number of ROs,
the first number of ROs including a seventh number of ROs mapping identical SSBs starting from an initial RO, with ROs in a time domain being the second number of PRACHs, or a seventh number of ROs neighboring in the time domain starting from the initial RO, or
the first number of ROs including a seventh number of ROs mapping identical SSBs starting from an initial RO, with ROs in a frequency domain being the second number of PRACHs, or a seventh number of ROs neighboring in the frequency domain starting from the initial RO, or
the first number of ROs including a seventh number of ROs mapping identical SSBs starting from an initial RO, with ROs being the second number of PRACHs.

31. The method according to Supplement 30, wherein,

for a mapping method for the SSB and the RO, an existing mapping method is reused, or other mapping methods are adopted.

32. The apparatus according to Supplement 30 or 31, wherein,

the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

33. The apparatus according to any one of Supplements 30 to 32, wherein, information of the initial RO is configured by RRC message.

34. The apparatus according to Supplement 33, wherein,
the information of the initial RO includes at least one of a system frame where the initial RO is located, a subframe in the system frame, a PRACH slot in the subframe, a position of an RO in the time domain in the PRACH slot, and a frequency domain position of the RO on the time domain position of the PRACH.

35. The apparatus according to Supplement 30, wherein,
the seventh number is configured by RRC message.

36. An RO configuring apparatus, provided in a network device, the apparatus including:

a second configuring unit configured to configure a terminal equipment with a first number of ROs for transmitting a second number of PRACHs,
the first number of ROs including a seventh number of ROs mapping identical SSBs starting from an initial RO, with ROs in a time domain being the second number of PRACHs, or a seventh number of ROs neighboring in the time domain starting from the initial RO, or
the first number of ROs including a seventh number of ROs mapping identical SSBs starting from an initial RO, with ROs in a frequency domain being the second number of PRACHs, or a seventh number of ROs neighboring in the frequency domain starting from the initial RO, or
the first number of ROs including a seventh number of ROs mapping identical SSBs starting from an initial RO, with ROs being the second number of PRACHs.

37. The method according to Supplement 36, wherein,
for a mapping method for the SSB and the RO, an existing mapping method is reused, or other mapping methods are adopted.

38. The apparatus according to Supplement 36 or 37, wherein,

the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

39. The apparatus according to any one of Supplements 36 to 38, wherein,
the second configuring unit configures information of the initial RO via RRC message.

40. The apparatus according to Supplement 39, wherein,
the information of the initial RO includes at least one of a system frame where the initial RO is located, a subframe in the system frame, a PRACH slot in the subframe, a position of an RO in the time domain in the PRACH slot, and a frequency domain position of the RO on the time domain of the PRACH.

41. The apparatus according to Supplement 36, wherein,
the second configuring unit configures the seventh number via RRC message.

42. A terminal equipment, including the apparatus according to any one of Supplements 1 to 21 and 31 to 35.

43. A network device, including the apparatus according to any one of Supplements 22 to 30 and 36 to 41.

44. A communication system, including the terminal equipment according to Supplement 42 and/or the network device according to Supplement 43.

Supplement II

1. A physical random access channel (PRACH) transmitting method, the method including:

transmitting a second number of PRACHs on a first number of ROs to a terminal equipment,
the first number of ROs being time-domain multiplexed, or the first number of ROs being frequency-domain multiplexed, or the first number of ROs being time-domain and frequency-domain multiplexed, and the first number and the second number being positive integers greater than or equal to 2.

2. The method according to Supplement 1, wherein,

the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

3. The method according to Supplement 1 or 2, wherein,
the first number of ROs are an RO group.

4. The method according to any one of Supplements 1 to 3, wherein for a case where the first number of ROs are time-domain multiplexed,
the first number of ROs are first number of time-domain multiplexed ROs mapping identical SSBs.

5. The method according to Supplement 4, wherein,
for a mapping method for the SSB and the RO, an existing mapping method is reused, or other mapping methods are adopted.

6. The method according to any one of Supplements 1 to 3, wherein for a case where the first number of ROs are time-domain multiplexed,
the first number of ROs are first number of ROs neighboring in the time domain.

8. The method according to any one of Supplements 1 to 3, wherein for a case where the first number of ROs are frequency-domain multiplexed,
the first number of ROs are first number of frequency-domain multiplexed ROs mapping identical SSBs.

9. The method according to Supplement 8, wherein,
for a mapping method for the SSB and the RO, an existing mapping method is reused, or other mapping methods are adopted.

10. The method according to any one of Supplements 1 to 3, wherein for a case where the first number of ROs are frequency-domain multiplexed,
the first number of ROs are first number of ROs neighboring in the frequency domain.

11. The method according to any one of Supplements 1 to 3, wherein for a case where the first number of ROs are time-domain and frequency-domain multiplexed,
the first number of ROs include a third number of time-domain multiplexed ROs mapping identical SSBs and a fourth number of frequency-domain multiplexed ROs mapping identical SSBs, the first number being equal to a multiplying of the third number and the fourth number.

12. The method according to any one of Supplements 1 to 3, wherein for a case where the first number of ROs are time-domain and frequency-domain multiplexed,
the first number of ROs include a third number of ROs neighboring in the time domain and a fourth number of ROs neighboring in the frequency domain, the first number being equal to a multiplying of the third number and the fourth number.

13. The method according to any one of Supplements 1 to 12, wherein,

the first number is equal to the second number, or,
the first number is greater than or equal to the second number.

14. The method according to any one of Supplements 1 to 13, wherein,
at least one of the first number, the second number, the third number and the fourth number is configured via RRC message.

15. The method according to any one of Supplements 1 to 3, wherein for a case where the first number of ROs are time-domain and frequency-domain multiplexed, ROs in the RO group are determined through the following steps:

determining an RO in a fifth number of RO groups in an ascending order of frequency-domain resource indices of ROs;
determining an RO in the fifth number of RO groups in an ascending order of time-domain resource indices of ROs within a PARCH slot;
determining an RO in the fifth number of RO groups in an ascending order of PRACH slot indices; and

circularly determining ROs in each RO group in sequence, until allocation of the fifth number of RO groups is completed.

16. The method according to any one of Supplements 3 to 15, wherein,
the RO group index is an index of an RO group.

17. The method according to Supplement 16, wherein,

the RO group index is determined in an ascending order of frequency-domain resource indices of ROs first, and then determined in an ascending order of time-domain resource indices of the ROs, or
the RO group index is determined in an ascending order of time-domain resource indices of ROs first, and then determined in an ascending order of frequency-domain resource indices of the ROs,
the time-domain resource indices and frequency-domain resource indices of the RO are determined according to PRACH configuration indices configured by the network device configuration or by other means.

18. The method according to any one of Supplements 3 to 17, wherein,

the number of RO groups is the fifth number,
numbers of ROs in RO groups in the fifth number of RO groups are identical, or numbers of ROs in RO groups in the fifth number of RO groups are different.

19. The method according to Supplement 18, wherein for a case where the numbers of ROs in a part of RO groups in the RO groups are different,

RO groups with identical numbers of ROs are mapped first, and RO group indices are mapped in an ascending order of numbers of ROs within the RO groups, or,
RO groups with identical numbers of ROs are mapped first, and RO group indices are mapped in a descending order of numbers of ROs within the RO groups.

20. The method according to any one of Supplements 1 to 19, wherein,
a maximum value of the first number is a sixth number.

21. The method according to any one of Supplements 18 to 20, wherein,

the fifth number is configured by RRC message, and/or,
the sixth number being configured via RRC message or being a default value.

22. An RO configuring method, the method including:

transmitting, by a network device a first number of ROs for transmitting a second number of PRACHs to a terminal equipment,
the first number of ROs being time-domain multiplexed, or the first number of ROs being frequency-domain multiplexed, or the first number of ROs being time-domain and frequency-domain multiplexed, and the first number and the second number being positive integers greater than or equal to 2.

23. The method according to Supplement 22, wherein,

the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

24. The method according to Supplement 22 or 23, wherein,
the first number of ROs are an RO group.

25. The method according to Supplement 22, wherein for a case where the first number of ROs are time-domain and frequency-domain multiplexed,

the first number of ROs include a third number of time-domain multiplexed ROs and a fourth number of frequency-domain multiplexed ROs,
the first number being equal to a multiplying of the third number and the fourth number.

26. The method according to Supplement 24, wherein,

the number of RO groups is the fifth number,
numbers of ROs in RO groups in the fifth number of RO groups are identical, or numbers of ROs in RO groups in the fifth number of RO groups are different.

27. The method according to any one of Supplements 22 to 26, wherein,
a maximum value of the first number is a sixth number.

28. The method according to any one of Supplements 22 to 27, wherein,
configuring by the network device, at least one of the first number, the second number, the third number, the fourth number, the fifth number and the sixth number via RRC message.

29. The method according to any one of Supplements 22 to 28, wherein,
configuring by the network device, the ROs by using an existing PRACH configuration table or configures the ROs in other ways.

30. A physical random access channel (PRACH) transmitting method, the method including:

transmitting by a terminal equipment, a second number of PRACHs on a first number of ROs,
the first number of ROs including a seventh number of ROs mapping identical SSBs starting from an initial RO, with ROs in a time domain being the second number of PRACHs, or a seventh number of ROs neighboring in the time domain starting from the initial RO, or
the first number of ROs including a seventh number of ROs mapping identical SSBs starting from an initial RO, with ROs in a frequency domain being the second number of PRACHs, or a seventh number of ROs neighboring in the frequency domain starting from the initial RO, or
the first number of ROs including a seventh number of ROs mapping identical SSBs starting from an initial RO, with ROs being the second number of PRACHs.

31. The method according to Supplement 30, wherein,
for a mapping method for the SSB and the RO, an existing mapping method is reused, or other mapping methods are adopted.

32. The method according to Supplement 30 or 31, wherein,

the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

33. The method according to any one of Supplements 30 to 32, wherein, information of the initial RO is configured by RRC message.

34. The method according to Supplement 33, wherein,
the information of the initial RO includes at least one of a system frame where the initial RO is located, a subframe in the system frame, a PRACH slot in the subframe, a position of an RO in the time domain in the PRACH slot, and a frequency domain position of the RO on the time domain position of the PRACH.

35. The method according to Supplement 34, wherein,
the seventh number is configured by RRC message.

36. An RO configuring method, the method including:

transmitting by a network device, a first number of ROs for transmitting a second number of PRACHs to a terminal equipment,
the first number of ROs including a seventh number of ROs mapping identical SSBs starting from an initial RO, with ROs in a time domain being the second number of PRACHs, or a seventh number of ROs neighboring in the time domain starting from the initial RO, or
the first number of ROs including a seventh number of ROs mapping identical SSBs starting from an initial RO, with ROs in a frequency domain being the second number of PRACHs, or a seventh number of ROs neighboring in the frequency domain starting from the initial RO, or
the first number of ROs including a seventh number of ROs mapping identical SSBs starting from an initial RO, with ROs being the second number of PRACHs.

37. The method according to Supplement 36, wherein,

for a mapping method for the SSB and the RO, an existing mapping method is reused, or other mapping methods are adopted.

38. The method according to Supplement 36 or 37, wherein,

the second number of PRACHs are PRACHs carrying identical preambles, or,
the second number of PRACHs are PRACHs carrying different preambles, or,
a part of the second number of PRACHs are PRACHs carrying identical preambles, and the other part of the second number of PRACHs are PRACHs carrying different preambles.

39. The method according to any one of Supplements 36 to 38, wherein, configuring by the network device, information of the initial RO via RRC message.

40. The method according to Supplement 39, wherein, the information of the initial RO includes at least one of a system frame where the initial RO is located, a subframe in the system frame, a PRACH slot in the subframe, a position of an RO in the time domain in the PRACH slot, and a frequency domain position of the RO on the time domain of the PRACH.

41. The method according to Supplement 36, wherein, configuring by the network device, the seventh number via RRC message.

**Claims**

1. A physical random access channel (PRACH) transmitting apparatus, provided in a terminal equipment, the apparatus comprising:

   a first transmitting unit configured to transmit a second number of PRACHs on a first number of ROs, the first number of ROs being time-domain multiplexed, or the first number of ROs being frequency-domain multiplexed, or the first number of ROs being time-domain and frequency-domain multiplexed, and the first number and the second number being positive integers greater than or equal to 2.

2. The apparatus according to claim 1, wherein,

   the second number of PRACHs are PRACHs carrying identical preambles, or,
   the second number of PRACHs are PRACHs carrying different preambles, or,
   a part of the second number of PRACHs are PRACHs carrying identical preambles, and the other part of the second number of PRACHs are PRACHs carrying different preambles.

3. The apparatus according to claim 1, wherein,

   the first number is equal to the second number, or,
   the first number is greater than or equal to the second number.

4. The apparatus according to claim 1, wherein,
   the first number of ROs are an RO group.

5. The apparatus according to claim 1, wherein in a case where the first number of ROs are time-domain multiplexed, the first number of ROs are first number of time-domain multiplexed ROs mapping identical SSBs or the first number of ROs are first number of ROs neighboring in the time domain.

6. The apparatus according to claim 1, wherein in a case where the first number of ROs are frequency-domain multiplexed,

   the first number of ROs are first number of frequency-domain multiplexed ROs mapping identical SSBs, or
   the first number of ROs are first number of ROs neighboring in the frequency domain.

7. The apparatus according to claim 1, wherein in a case where the first number of ROs are time-domain and frequency-domain multiplexed,

   the first number of ROs comprise a third number of time-domain multiplexed ROs mapping identical SSBs and a fourth number of frequency-domain multiplexed ROs mapping identical SSBs, or,
the first number of ROs comprise a third number of ROs neighboring in the time domain and a fourth number of ROs neighboring in the frequency domain,
the first number being equal to a multiplying of the third number and the fourth number.

8. The apparatus according to claim 1, wherein in a case where the first number of ROs are time-domain and frequency-domain multiplexed, ROs in the RO group are determined through the following steps:

determining an RO in a fifth number of RO groups in an ascending order of frequency-domain resource indices of ROs;
determining an RO in the fifth number of RO groups in an ascending order of time-domain resource indices of ROs within a PARCH slot;
determining an RO in the fifth number of RO groups in an ascending order of PRACH slot indices; and
circularly determining ROs in each RO group in sequence, until allocation of the fifth number of RO groups is completed.

9. The apparatus according to claim 4, wherein,

the RO group index is an index of an RO group,
and the RO group index is determined in an ascending order of frequency-domain resource indices of ROs first, and then determined in an ascending order of time-domain resource indices of the ROs, or
the RO group index is determined in an ascending order of time-domain resource indices of ROs first, and then determined in an ascending order of frequency-domain resource indices of the ROs.

10. The apparatus according to claim 4, wherein,

the number of RO groups is the fifth number,
numbers of ROs in RO groups in the fifth number of RO groups are identical, or numbers of ROs in RO groups in the fifth number of RO groups are different.

11. The apparatus according to claim 10, wherein for a case where the numbers of ROs in a part of RO groups in the RO groups are different,

RO groups with identical numbers of ROs are mapped first, and RO group indices are mapped in an ascending order of numbers of ROs within the RO groups, or,
RO groups with identical numbers of ROs are mapped first, and RO group indices are mapped in a descending order of numbers of ROs within the RO groups.

12. The apparatus according to claim 1, wherein,

a maximum value of the first number is a sixth number,
the sixth number being configured via RRC message or being a default value.

13. The apparatus according to claim 1, wherein,
at least one of the first number, the second number, the third number, the fourth number and the fifth number is configured via RRC message.

14. An RO configuring apparatus, provided in a network device, the apparatus comprising:

a first configuring unit configured to configure a terminal equipment with a first number of ROs for transmitting a second number of PRACHs,
the first number of ROs being time-domain multiplexed, or the first number of ROs being frequency-domain multiplexed, or the first number of ROs being time-domain and frequency-domain multiplexed, and the first number and the second number being positive integers greater than or equal to 2.

15. The apparatus according to claim 14, wherein,

the second number of PRACHs are PRACHs carrying identical preambles, or,

the second number of PRACHs are PRACHs carrying different preambles, or,
a part of the second number of PRACHs are PRACHs carrying identical preambles, and the other part of the second number of PRACHs are PRACHs carrying different preambles.

16. The apparatus according to claim 14, wherein,
the first number of ROs are an RO group.

17. The apparatus according to claim 14, wherein in a case where the first number of ROs are time-domain and frequency-domain multiplexed,

the first number of ROs comprise a third number of time-domain multiplexed ROs and a fourth number of frequency-domain multiplexed ROs,
the first number being equal to a multiplying of the third number and the fourth number.

18. The apparatus according to claim 16, wherein,

the number of RO groups is a fifth number,
numbers of ROs in RO groups in the fifth number of RO groups are identical, or numbers of ROs in RO groups in the fifth number of RO groups are different.

19. The apparatus according to claim 14, wherein,
a maximum value of the first number is a sixth number.

20. The apparatus according to claim 14, wherein,
the first configuring unit configures at least one of the first number, the second number, the third number, the fourth number, the fifth number and the sixth number via RRC message.

**FIG. 1**

201

a terminal equipment transmits a second number of PRACHs on a first number of ROs, the first number of Valid ROs being time-domain multiplexed, or the first number of Valid ROs being frequency-domain multiplexed, or the first number of Valid ROs being time-domain and frequency-domain multiplexed, and the first number and the second number being positive integers greater than or equal to 2.

## FIG. 2

Frequency domain

| RO 3 SSB 1 | RO 7 SSB 3 | RO 3 SSB 1 | RO 7 SSB 3 |
| RO 2 SSB 1 | RO 6 SSB 3 | RO 2 SSB 1 | RO 6 SSB 3 |
| RO 1 SSB 0 | RO 5 SSB 2 | RO 1 SSB 0 | RO 5 SSB 2 |
| RO 0 SSB 0 | RO 4 SSB 2 | RO 0 SSB 0 | RO 4 SSB 2 |

Time domain

## FIG. 3

Frequency domain

| SSB 1 | SSB 3 | SSB 1 | SSB 3 |
| SSB 1 | SSB 3 | SSB 1 | SSB 3 |
| SSB 0 | SSB 2 | SSB 0 | SSB 2 |
| SSB 0 | SSB 2 | SSB 0 | SSB 2 |

Time domain

## FIG. 4

Frequency
domain

Time domain

## FIG. 5

Frequency domain

| SSB 0 | SSB 1 | SSB 2 | SSB 3 |
| SSB 0 | SSB 1 | SSB 2 | SSB 3 |
| SSB 0 | SSB 1 | SSB 2 | SSB 3 |
| SSB 0 | SSB 1 | SSB 2 | SSB 3 |

Time domain

## FIG. 6

Frequency
domain

| SSB 0 | SSB 1 | SSB 2 | SSB 3 |
| SSB 0 | SSB 1 | SSB 2 | SSB 3 |
| SSB 0 | SSB 1 | SSB 2 | SSB 3 |
| SSB 0 | SSB 1 | SSB 2 | SSB 3 |

Time domain

## FIG. 7

Frequency
domain

Time domain

## FIG. 8

Frequency
domain

| SSB 0 | SSB 1 | SSB 2 | SSB 3 | SSB 0 | SSB 1 | SSB 2 | SSB 3 |
| SSB 0 | SSB 1 | SSB 2 | SSB 3 | SSB 0 | SSB 1 | SSB 2 | SSB 3 |
| SSB 0 | SSB 1 | SSB 2 | SSB 3 | SSB 0 | SSB 1 | SSB 2 | SSB 3 |
| SSB 0 | SSB 1 | SSB 2 | SSB 3 | SSB 0 | SSB 1 | SSB 2 | SSB 3 |

Time domain

# FIG. 9

Frequency
domain

Time domain

# FIG. 10

Frequency
domain

Time domain

# FIG. 11

**FIG. 12**

**FIG. 13**

**FIG. 14**

EP 4 693 992 A1

FIG. 15

FIG. 16

FIG. 17

35

| | RO group 0 |
|---|---|
| | RO group 1 |
| | RO group 2 |
| | RO group 3 |
| | RO group 4 |
| | RO group 5 |
| | RO group 6 |
| | RO group 7 |

Frequency domain

Time domain

## FIG. 18

| | RO group 0 |
|---|---|
| | RO group 1 |
| | RO group 2 |
| | RO group 3 |
| | RO group 4 |
| | RO group 5 |
| | RO group 6 |
| | RO group 7 |

Frequency domain

Time domain

## FIG. 19

2001

a network device transmits a first number of Valid ROs for transmitting a second number of PRACHs to a terminal equipment, the first number of Valid ROs being time-domain multiplexed, or the first number of Valid ROs being frequency-domain multiplexed, or the first number of Valid ROs being time-domain and frequency-domain multiplexed, and the first number and the second number being positive integers greater than or equal to 2.

## FIG. 20

Multiple PRACH
configuration List

Multiple PRACH
configuration 0

Multiple PRACH
configuration 1

Multiple PRACH
configuration n

The number of RO
Sets

Numbers of ROs in
the RO Sets and/or
the specific number
of multiple PRACHs

......

# FIG. 21

Multiple PRACH
configuration List

Multiple PRACH
configuration 0

Multiple PRACH
configuration 1

Multiple PRACH
configuration n

Numbers of ROs in
the RO Sets and/or
the specific number
of multiple PRACHs

......

# FIG. 22

| Network device | | Terminal equipment |
|---|---|---|

Step 2301: a network device transmits a first number of valid ROs for transmitting a second number of PRACHs to a terminal equipment

Step 2302: the terminal equipment transmits a second number of PRACHs on a first number of Valid ROs

## FIG. 23

2401

a terminal equipment transmits a second number of PRACHs on a first number of ROs, the first number of valid ROs including a seventh number of ROs mapping identical SSBs starting from an initial RO, with ROs in a time domain being the second number of PRACHs, or a seventh number of ROs neighboring in the time domain starting from the initial RO, or the first number of valid ROs including a seventh number of ROs mapping identical SSBs starting from an initial RO, with ROs in a frequency domain being the second number of PRACHs, or a seventh number of ROs neighboring in the frequency domain starting from the initial RO, or the first number of valid ROs including a seventh number of ROs mapping identical SSBs starting from an initial RO, with ROs being the second number of PRACHs.

## FIG. 24

2501

a network device transmits a first number of valid ROs for transmitting a second number of PRACHs to a terminal equipment, the first number of valid ROs including a seventh number of ROs mapping identical SSBs starting from an initial RO, with ROs in a time domain being the second number of PRACHs, or a seventh number of ROs neighboring in the time domain starting from the initial RO, or the first number of valid ROs including a seventh number of ROs mapping identical SSBs starting from an initial RO, with ROs in a frequency domain being the second number of PRACHs, or a seventh number of ROs neighboring in the frequency domain starting from the initial RO, or the first number of valid ROs including a seventh number of ROs mapping identical SSBs starting from an initial RO, with ROs being the second number of PRACHs.

**FIG. 25**

2600

Physical random access channel transmitting apparatus 2601

First transmitting unit

**FIG. 26**

2700

RO configuring apparatus

2701

First configuring
unit

**FIG. 27**

2800

Physical random access channel
transmitting apparatus

2801

Second
transmitting unit

**FIG. 28**

2900

RO configuring
apparatus

2901

Second configuring
unit

**FIG. 29**

3000

**Terminal equipment**

3010

3030

3040

**Input unit**

**Processor**

**Communication module (transmitter/ receiver)**

**Memor**

3020

**Buffer**

**Application/ function**

**Data**

**Program**

**Display** — 3050

**Power supply** — 3060

# FIG. 30

3100

3120

3110

**Network device**

3150

**Memory**

3130

**Processor**

3140

**Transceiver**

**Program**

# FIG. 31

## INTERNATIONAL SEARCH REPORT

| International application No. |
| --- |
| **PCT/CN2023/086934** |

| A. | CLASSIFICATION OF SUBJECT MATTER |
| --- | --- |

H04L5/00(2006.01)i;  H04W 72/23(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 物理, 随机, 接入, 信道, 配置, 时机, 前导码, 时域, 频域, 复用, 映射, 索引, PRACH, RO, RACH, Physical, Random, Access, Channel, occasion, preamble, time, mapping, multiplexing, index

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023108411 A1 (QUALCOMM INC.) 06 April 2023 (2023-04-06) description, paragraphs 76-128 | 1-20 |
| X | INTERDIGITAL, INC. "Discussion on Initial Access Channels and Signals for Operation in 52.6-71GHz" *3GPP TSG RAN WG1 #106bis-E, R1-2109903*, 19 October 2021 (2021-10-19), full text, section 2.2 | 1-20 |
| A | CN 110958712 A (BEIJING SAMSUNG TELECOM R&D CENTER et al.) 03 April 2020 (2020-04-03) entire document | 1-20 |
| A | US 2022408491 A1 (LENOVO (BEIJING) LTD.) 22 December 2022 (2022-12-22) entire document | 1-20 |
| A | US 2023056778 A1 (TELEFONAKTIEBOLAGET LM ERICSSON (PUBL)) 23 February 2023 (2023-02-23) entire document | 1-20 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 November 2023** | **22 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
| :---: | :---: | :---: |
| Information on patent family members | | **PCT/CN2023/086934** |

| Patent document cited in search report | | | Publication date (day/month/year) | Patent family member(s) | | | Publication date (day/month/year) |
| :---: | :---: | :---: | :---: | :---: | :---: | :---: | :---: |
| US | 2023108411 | A1 | 06 April 2023 | WO | 2023056477 | A1 | 06 April 2023 |
| CN | 110958712 | A | 03 April 2020 | KR | 20210049896 | A | 06 May 2021 |
| | | | | EP | 3841819 | A1 | 30 June 2021 |
| | | | | WO | 2020067696 | A1 | 02 April 2020 |
| | | | | US | 2022070930 | A1 | 03 March 2022 |
| US | 2022408491 | A1 | 22 December 2022 | WO | 2021087978 | A1 | 14 May 2021 |
| | | | | EP | 4055972 | A1 | 14 September 2022 |
| | | | | CN | 114651518 | A1 | 21 June 2022 |
| US | 2023056778 | A1 | 23 February 2023 | WO | 2021143705 | A1 | 22 July 2021 |
| | | | | EP | 4091395 | A1 | 23 November 2022 |

Form PCT/ISA/210 (patent family annex) (July 2022)